# EUROPÄISCHE PATENTSCHRIFT

(11) **EP 4 003 662 B1**
(45) Veröffentlichungstag und Bekanntmachung des Hinweises auf die Patenterteilung: **04.01.2023**
(21) Anmeldenummer: 20747371.1
(22) Anmeldetag: 24.07.2020
(51) Int. Cl.: B25J 9/08, B25J 19/00, B25J 15/04

(54) **ARMMODUL, ROBOTERARM UND INDUSTRIEROBOTER**
ARM MODULE, ROBOTIC ARM AND INDUSTRIAL ROBOT
MODULE DE BRAS, BRAS DE ROBOT ET ROBOT INDUSTRIEL

(30) Priorität: 25.07.2019 DE 102019120128
(43) Veröffentlichungstag der Anmeldung: 01.06.2022
(73) Patentinhaber: Beckhoff Automation GmbH, 33415 Verl (DE)
(72) Erfinder: KASTLER, Peter, 1220 Wien (AT); MAIER, Clemens, 6700 Bludenz (AT); MORSCHER, Thomas, 1080 Wien (AT); PEHLIVAN, Armin, 6714 Nüziders (AT); ZECH, Christoph, 1130 Wien (AT)
(74) Vertreter: Patentanwaltskanzlei WILHELM & BECK
(86) Internationale Anmeldenummer: PCT/EP2020/070974
(87) Internationale Veröffentlichungsnummer: WO 2021/013995

(56) Entgegenhaltungen:
- EP-A1- 3 372 354
- WO-A1-96/08675
- WO-A1-2019/081662
- DE-A1-102017 001 943
- US-A- 4 370 091
- US-A- 5 205 701
- US-A1- 2013 340 560
- US-A1- 2019 168 395

## Beschreibung

Die Erfindung betrifft ein Armmodul gemäß Patentanspruch 1, einen Roboterarm gemäß Patentanspruch 13 und einen Industrieroboter gemäß Patentanspruch 15.

Die technische Disziplin der Automatisierungstechnik hat zur Aufgabe, Maschinen inkl.

Industrieroboter und/oder Anlagen zu automatisieren, d. h. aus sich heraus selbständig und ohne Mitwirkung eines Menschen betreiben zu können. Ein Grad der Automatisierung in einem Automatisierungssystem ist umso höher, je unabhängiger eine jeweilige Maschine in einer Anlage und/oder eine betreffende Anlage von menschlichen Eingriffen ist bzw. sind.

Ziele der Automatisierungstechnik sind eine Entlastung des Menschen von gefährlichen, anstrengenden und/oder eintönigen Tätigkeiten, eine Verbesserung einer Qualität der produzierten Güter durch die technische Anlage, eine höhere Leistungsfähigkeit der Anlage und eine Kostenreduktion durch die Anlage. Durch allgemeine Fortschritte bei Maschinen, einer Signalerfassung, einer Signalverarbeitung und/oder einer Kommunikation von Komponenten innerhalb des Automatisierungssystems kann der Automatisierungsgrad einer bestehenden oder einer neuen Anlage im Vergleich mit dem Stand der Technik deutlich gesteigert werden.

Für eine Kommunikation weist ein Automatisierungssystem entsprechende Komponenten auf, die meist in einem sogenannten Local Area Network miteinander kommunizieren, welches ein räumlich begrenztes Netzwerk ist, in welchem die verschiedenen Netzwerkkomponenten kabellos, optisch, elektrisch und/oder optoelektrisch miteinander gekoppelt sind. Bei den Netzwerkkomponenten kann es sich um einen oder mehrere Server und eine oder mehrere Arbeitsstationen, sogenannte Netzwerkelemente bzw. topologisch: Netzwerkknoten, handeln, welche z. B. über Funkstrecken, Lichtwellenleiter, Koaxialkabel und/oder Twisted-Pair-Kabel miteinander verbunden sind und über diese kommunizieren können.

Ein in der Automatisierungstechnik eingesetztes Automatisierungs-Kommunikationsnetzwerk entspricht in der Regel einem sogenannten Feldbussystem. Ein Feldbussystem ist ein Bussystem, bei welchem dezentral angeordnete Komponenten einer Maschinenperipherie wie Eingangsmodule, Ausgangsmodule, Antriebe, Bedienterminals etc. über das Feldbussystem mit Steuereinheiten verbunden sind. Für die Datenübertragung steht ein gemeinsamer Übertragungskanal, z. B. in Form des Feldbusses oder als eine Funkstrecke zur Verfügung. Die Kommunikation zwischen den Netzwerkkomponenten innerhalb des LANs erfolgt auf Basis von Netzwerkprotokollen.

Anwendungsspezifische Industrieroboter sind ein fester Bestandteil von solchen automatisierten Anlagen. Ein Industrieroboter ist eine programmierbare Maschine zur Handhabung, Montage und/oder Bearbeitung von Werkstücken. Der Industrieroboter umfasst im Allgemeinen eine Roboterbasis, einen Roboterarm mit einer Mehrzahl von gegeneinander schwenkbaren und/oder drehbaren proximalen und distalen Armgliedern, einem Endeffektor, einer lokalen Steuerung/Regelung und ggf. einer globalen Steuerung/Regelung. Oft sind Industrieroboter mit unterschiedlichen Sensoren ausgerüstet. Programmiert ist der Industrieroboter in der Lage, einen Arbeitsablauf autonom durchzuführen oder eine Durchführung einer Aufgabe in Abhängigkeit von Informationen eines Sensors zu variieren.

So zeigt beispielsweise die US 2018/0111275 A1 einen modularen Roboterarm. Der modulare Roboterarm weist einen Satz von modularen Roboterkomponenten auf, die miteinander verbunden sind. Um die modularen Roboterkomponenten miteinander zu verbinden, ist jeweils ein Ringabschnitt vorgesehen. In dieser Ausgestaltung wirken hohe Kräfte auf die Verbindung zwischen den beiden Roboterkomponenten.

Ferner sind aus WO 2019/081662 A1, US 2016/0046019 A1, EP 0 743 143, WO 99/01261 A1, EP 3 372 354 A1 und US 4 370 091 A1 verschiedene Ausgestaltungen von Roboterarmen bekannt.

Ferner ist aus US 2013/340560 A1 ein rekonfigurierbarer Roboter-Manipulatorarm bekannt. Der Roboter-Manipulatorarm weist ein erstes Gelenk, umfassend eine erste Endbaugruppe mit einer mechanischen Kopplungsschnittstelle und einer elektrischen Schnittstelle; eine zweite Endbaugruppe mit einer mechanischen Kopplungsschnittstelle und einer elektrischen Schnittstelle; und ein zweites Gelenk auf. Das zweite Gelenk umfasst eine dritte Endbaugruppe mit einer mechanischen Kopplungsschnittstelle und einer elektrischen Schnittstelle; und eine vierte Endbaugruppe mit einer mechanischen Kupplungsschnittstelle und einer elektrischen Schnittstelle. Die erste und die vierte Endbaugruppe sind an der ersten und der vierten mechanischen Kopplungsschnittstelle verbindbar, um einen ersten Adapter zwischen dem ersten und dem zweiten Gelenk zu bilden, der eine funktionsfähige elektrische Verbindung zwischen der ersten und der vierten elektrischen Schnittstelle aufweist. Das erste und das zweite Gelenk sind an dem ersten Adapter lösbar und an der zweiten und der dritten mechanischen Kopplungsschnittstelle wieder verbindbar, um einen zweiten Adapter zwischen dem ersten und dem zweiten Gelenk zu bilden, der eine operative elektrische Verbindung zwischen der zweiten und der dritten elektrischen Schnittstelle enthält.

Es ist Aufgabe der Erfindung, ein besonders schnell und einfach zu montierendes Armmodul für einen Roboterarm, einen besonders einfach und flexibel zu montierenden Roboterarm und einen Industrieroboter bereitzustellen.

Diese Aufgabe wird mittels eines Armmoduls gemäß Patentanspruch 1, eines modularen Roboterarms gemäß Patentanspruch 13 und eines Industrieroboters gemäß Patentanspruch 15 gelöst. Vorteilhafte Ausführungsformen sind in den abhängigen Ausführungsformen angegeben.

Es wurde erkannt, dass ein verbessertes Armmodul dadurch bereitgestellt werden kann, dass das Armmodul ein erstes Gehäuse, eine erste Anschlussseite und eine zweite Anschlussseite aufweist. Die erste Anschlussseite weist eine erste Anschlussplatte, eine ersten Fluidkontakteinrichtung und eine erste Kontakteinrichtung auf. Die zweite Anschlussseite ist mit dem ersten Gehäuse mechanisch drehfest verbunden ist und weist eine zweite Anschlussplatte aufweist, wobei an der ersten Anschlussplatte die erste Fluidkontakteinrichtung und die erste Kontakteinrichtung angeordnet sind und sich parallel zu einer ersten Montageachse erstrecken. Die erste Anschlussseite ist mit einem weiteren Armmodul des Roboterarms mechanisch verbindbar, wobei über die erste Fluidkontakteinrichtung ein Fluid, insbesondere Druckluft oder eine Hydraulikflüssigkeit, und über die erste Kontakteinrichtung ein optisches Signal und/oder ein elektrisches Signal zur Datenübertragung mit dem weiteren Armmodul austauschbar ist. An einer ersten äußeren Umfangsseite der ersten Anschlussplatte ist ein Außengewinde umlaufend um die erste Montageachse angeordnet ist, wobei die zweite Anschlussplatte umfangsseitig durch einen Befestigungsring umgriffen ist und der Befestigungsring an einer inneren Umfangsseite ein korrespondierend zu dem Außengewinde ausgebildetes Innengewinde aufweist. Der Befestigungsring ist axial fest und um die zweite Montageachse drehbar mit einem ersten Gehäuse des Armmoduls verbunden, wobei an der ersten Anschlussplatte eine erste Stirnverzahnung angeordnet ist. Die zweite Anschlussplatte weist eine zweite Stirnverzahnung auf, wobei die erste Stirnverzahnung und die zweite Stirnverzahnung komplementär und/oder korrespondierend zueinander ausgebildet sind.

Diese Ausgestaltung hat den Vorteil, dass in einem einzigen Montageschritt zur Verbindung des Armmoduls mit dem weiteren Armmodul sowohl eine Fluidverbindung als auch die Datenverbindung und zusätzlich eine mechanisch belastbare Verbindung mit dem weiteren Armmodul herstellbar sind. Dadurch ist das Armmodul mit dem weiteren aktiven Armmodul besonders schnell und einfach zu einem modularen Roboterarm montierbar. Insbesondere können über die erste und zweite Stirnverzahnung hohe Drehmomente hinweg übertragen werden, sodass das Armmodul besonders schnell beschleunigt werden kann. Ferner kann das Armmodul eine hohe Last beispielsweise eines zu hebenden Gegenstands abstützen.

Ferner kann das optische Signal oder elektrische Signal zur Datenübertragung innenseitig des Armmoduls geführt werden und außenseitig des Armmoduls auf eine Fluidleitung und/oder Datenleitung verzichtet werden. Eine ungewollte Beschädigung des Armmoduls, beispielsweise durch ein Hängenbleiben und/oder ein Verhaken an der Fluidleitung und/oder Datenleitung wird somit zuverlässig vermieden.

Des Weiteren kann das Armmodul besonders schnell und automatisiert in Großserie gefertigt werden. Dadurch kann das Armmodul für einen Modulbaukasten eines modularen Roboters besonders kostengünstig hergestellt werden.

In einer weiteren Ausführungsform ist die erste Stirnverzahnung und/oder die zweite Stirnverzahnung als Hirthverzahnung ausgebildet. Dadurch ist die erste Stirnverzahnung und/oder die zweite Stirnverzahnung selbstzentrierend ausgebildet und es kann eine automatische Zentrierung bei Montage des weiteren Armmoduls an der ersten Anschlussseite bereitgestellt werden.

In einer weiteren Ausführungsform ist die zweite Stirnverzahnung innenseitig anschließend zu dem Befestigungsring angeordnet ist. Dadurch kann in radialer Richtung die zweite Stirnverzahnung besonders schlank ausgebildet werden, sodass insgesamt der Bauraumbedarf der ersten und zweiten Anschlussseite besonders gering ist.

Um ein besonders großes Drehmoment an der zweiten Anschlussseite zu übertragen, ist die zweite Stirnverzahnung innenseitig anschließend zu dem Befestigungsring angeordnet.

In einer weiteren Ausführungsform sind die erste Anschlussplatte und die erste Stirnverzahnung einstückig und materialeinheitlich ausgebildet. Dadurch kann die erste Anschlussseite in einem Spritzgussverfahren besonders kostengünstig und mechanisch stabil hergestellt werden.

In einer weiteren Ausführungsform sind die zweite Anschlussplatte und die zweite Stirnverzahnung einstückig und materialeinheitlich ausgebildet. Dadurch kann die zweite Anschlussseite in einem Spritzgussverfahren besonders kostengünstig und mechanisch stabil hergestellt werden.

In einer weiteren Ausführungsform weist die erste Stirnverzahnung wenigstens einen ersten Zahn auf, wobei der erste Zahn eine erste Einbuchtung aufweist, die sich in axialer Richtung entlang der ersten Montageachse erstreckt, wobei die zweite Anschlussseite mittels eines dritten Befestigungsmittels mit dem ersten Gehäuse drehfest verbunden ist, wobei das dritte Befestigungsmittel über die zweite Anschlussplatte ragt, wobei die erste Einbuchtung zumindest abschnittsweise korrespondierend zu dem dritten Befestigungsmittel ausgebildet ist. Dadurch kann der radiale Bauraumbedarf der ersten und zweiten Anschlussseite gering gehalten werden.

In einer weiteren Ausführungsform schließt sich in radialer Richtung innenseitig an die erste äußere Umfangsseite die erste Stirnverzahnung an, wobei radial zwischen der ersten Leistungskontakteinrichtung und der ersten Stirnverzahnung die erste Fluidkontakteinrichtung angeordnet ist.

In einer weiteren Ausführungsform ist die erste Leistungskontakteinrichtung in radialer Richtung bezogen auf die erste Montageachse zwischen der ersten Kontakteinrichtung und der ersten Fluidkontakteinrichtung angeordnet, wobei radial außenseitig zu der ersten Leistungskontakteinrichtung die erste Fluidkontakteinrichtung zwischen der ersten Leistungskontakteinrichtung und der ersten äußeren Umfangsseite an der ersten Anschlussplatte angeordnet ist, wobei über die erste Fluidkontakteinrichtung ein Fluid, insbesondere Druckluft oder eine Hydraulikflüssigkeit, über die erste Kontakteinrichtung ein optisches Signal und/oder ein elektrisches Signal zur Datenübertragung und über die erste Leistungskontakteinrichtung hinweg eine elektrische Leistung zur Versorgung des Armmoduls mit elektrischer Energie hinweg übertragbar ist. Diese Ausgestaltung hat den Vorteil, dass dadurch eine optimale kompakte Ausgestaltung der ersten Anschlussseite bereitgestellt werden kann, über die ein hoher Fluidstrom und eine hoher elektrischer Strom übertragbar ist. Durch die zentrierte Anordnung der Kontakteinrichtung kann eine unbeschränkte Rotierbarkeit der ersten Anschlussseite bei gleichzeitig hoher Datenübertragungsrate, insbesondere gemäß dem EtherCAT-Standard, sichergestellt werden.

In einer weiteren Ausführungsform weist die zweite Anschlussseite eine korrespondiert zur ersten Fluidkontakteinrichtung ausgebildete zweite Fluidkontakteinrichtung, eine korrespondierend zur ersten Leistungskontakteinrichtung ausgebildete zweite Leistungskontakteinrichtung und eine korrespondierend zur ersten Kontakteinrichtung ausgebildete zweite Kontakteinrichtung aufweist, wobei an der zweiten Anschlussplatte die zweite Fluidkontakteinrichtung, die zweite Leistungskontakteinrichtung und die zweite Kontakteinrichtung angeordnet sind und sich die zweite Fluidkontakteinrichtung, die zweite Leistungskontakteinrichtung und die zweite Kontakteinrichtung längs einer zweiten Montageachse erstrecken, wobei die erste Fluidkontakteinrichtung mit der zweiten Fluidkontakteinrichtung fluidisch direkt oder indirekt in dem ersten Gehäuse und die erste Kontakteinrichtung mit der zweiten Kontakteinrichtung datentechnisch zur Übertragung des optischen und/oder elektrischen Signals direkt oder indirekt in dem ersten Gehäuse verbunden sind, wobei die erste Leistungskontakteinrichtung und die zweite Leistungskontakteinrichtung elektrisch direkt oder in indirekt in dem ersten Gehäuse miteinander verbunden sind, wobei die erste Leistungskontakteinrichtung und die zweite Leistungskontakteinrichtung elektrisch miteinander verbunden sind, wobei über die zweite Fluidkontakteinrichtung das Fluid, über die zweite Leistungskontakteinrichtung die elektrische Leistung und über die zweite Kontakteinrichtung das optisches und/oder das elektrisches Signal hinweg übertragbar ist. Dadurch können mehrere Armmodule über die erste und zweite Anschlussseite besonders einfach montiert werden, wobei gleichzeitig eine fluidische, leistungselektrische und datentechnische Kontaktierung erfolgt.

In einer weiteren Ausführungsform weist die erste Fluidkontakteinrichtung mehrere in Umfangsrichtung bezogen auf die erste Montageachse versetzt angeordnete erste Fluidkontakte auf, wobei die ersten Fluidkontakte konzentrisch zu der ersten Montageachse angeordnet und identisch zueinander ausgebildet sind, wobei die ersten Fluidkontakte fluidisch voneinander getrennt sind und/oder zumindest teilweise fluidisch parallelgeschaltet sind. Dadurch können unterschiedliche Fluide beispielsweise mit einem unterschiedlichen Druckniveau oder ein Fluid in unterschiedliche Richtungen oder ein besonders großer Massenstrom des Fluids über die erste Anschlussseite übertragen werden.

In einer weiteren Ausführungsform weist die zweite Fluidkontakteinrichtung wenigstens einen zweiten Fluidkontakt auf, wobei sich der zweite Fluidkontakt parallel zur zweiten Montageachse erstreckt, wobei der erste Fluidkontakt mit dem zweiten Fluidkontakt zum Austauschs eines Fluids miteinander verbunden sind, wobei der erste Fluidkontakt eine Rohraufnahme und der zweite Fluidkontakt einen Rohrabschnitt aufweisen, wobei die Rohraufnahme und der Rohrabschnitt zumindest umfangsseitig korrespondieren zueinander ausgebildet sind. Dadurch ist in axialer Richtung die erste Anschlussseite besonders kompakt ausgebildet.

In einer weiteren Ausführungsform weist das Armmodul einen beabstandet und parallel zu der ersten Montageachse verlaufenden Stift auf, wobei der Stift mit der ersten Anschlussplatte elektrisch und mechanisch verbunden ist und über die erste Anschlussplatte ragt, wobei der Stift ausgebildet ist, in eine Stiftaufnahme des weiteren Armmoduls zur Kodierung und/oder Positionierung des Armmoduls zum weiteren Armmodul einzugreifen und/oder wobei die zweite Anschlussplatte eine Stiftaufnahme aufweist, wobei die Stiftaufnahme korrespondierend zu dem Stift ausgebildet und dazu eingerichtet ist, einen Stift eines weiteren Armmoduls aufzunehmen. Dadurch kann eine Fehlmontage vermieden werden.

In einer weiteren Ausführungsform ist das Armmodul als ein aktives Armmodul ausgebildet ist, und weist eine Antriebseinrichtung auf, wobei die erste Anschlussseite rotierbar um die erste Montageachse gelagert ist und drehmomentschlüssig mit der Antriebseinrichtung verbunden ist, wobei die Antriebseinrichtung ausgebildet ist, die erste Anschlussseite steuerbar um die erste Montageachse zu rotieren. Durch die oben beschriebene Ausgestaltung des Armmoduls kann die Antriebseinrichtung die erste Anschlussseite unlimitiert um die erste Montageachse rotieren. Alternativ ist das Armmodul als ein passives Armmodul ausgebildet ist, wobei die erste Anschlussplatte drehfest mit dem ersten Gehäuse auf einer zur zweiten Anschlussseite abgewandten Seite des ersten Gehäuses verbunden ist.

In einer weiteren Ausführungsform weist die erste Anschlussseite eine Hohlwelle auf, wobei die Hohlwelle drehmomentschlüssig mit einer Ausgangsseite der Antriebseinrichtung verbunden ist, wobei die Hohlwelle die Antriebseinrichtung durchgreift und ein erstes axiales Ende der Hohlwelle mit der ersten Anschlussplatte drehfest verbunden ist und ein zweites axiale Ende der Hohlwelle beabstandet zu der Antriebseinrichtung angeordnet ist, wobei in der Hohlwelle wenigstens ein mit der ersten Fluidkontakteinrichtung fluidisch verbundener Fluidkanal und wenigstens eine mit der ersten Kontakteinrichtung verbundene elektrische Datenverbindungangeordnet ist. Dadurch kann in radialer Richtung bezogen auf die Montageachse das Armmodul besonders kompakt ausgebildet sein.

Ein verbesserter Roboterarm für einen Industrieroboter kann dadurch bereitgestellt werden, dass der Roboterarm wenigstens ein erstes Armmodul und ein zweites Armmodul aufweist, wobei das erste Armmodul und das zweite Armmodul wie oben beschrieben ausgebildet sind. Der Befestigungsring des ersten Armmoduls ist derart auf die erste Anschlussseite des zweiten Armmoduls aufgeschraubt, dass das Innengewinde des ersten Armmoduls und das Außengewinde der ersten Anschlussseite des zweiten Armmoduls ineinander greifen und die erste Stirnverzahnung der ersten Anschlussseite und die zweite Stirnverzahnung der zweiten Anschlussseite ineinander eingreifen. Die erste Anschlussseite des zweiten Armmoduls ist mit der zweiten Anschlussseite des ersten Armmoduls mechanisch zur Übertragung von Stützkräften und/oder Antriebskräften zwischen dem ersten Armmodul und dem zweiten Armmodul verbunden. Über die miteinander verbundenen ersten und zweiten Anschlussseiten des ersten Armmoduls und zweiten Armmoduls sind das Fluid für einen am Roboterarm anschließbaren Endeffektor und/oder das optisches Signal und/oder das elektrische Signal für die Datenübertragung und zur Steuerung der beiden Armmodule und/oder des Endeffektors austauschbar. Durch den Befestigungsring kann das Innengewinde schnell und einfach auf das Außengewinde geschraubt werden und dadurch der Eingriff der Stirnverzahnungen ineinander axial gesichert werden. Dadurch kann ein besonders großes Drehmoment zwischen dem ersten Armmodul und dem zweiten Armmodul ausgetauscht werden. Dadurch kann der Roboterarm besonders hohe Lasten bewegen und/oder besonders schnell bewegt werden.

In einer weiteren Ausführungsform sind die erste Stirnverzahnung und die zweite Stirnverzahnung derart zueinander ausgebildet, dass die beiden Stirnverzahnungen bei einer Montage der ersten Anschlussseite an der zweiten Anschlussseite durch ein Entlanggleiten der beiden Stirnverzahnungen aneinander die zweite Anschlussplatte zentriert zu der ersten Montageachse ausgerichtet ist.

In einer weiteren Ausführungsform weist die zweite Anschlussseite die Stiftaufnahme auf, wobei die Stiftaufnahme zur Orientierung und/oder Kodierung der zweiten Anschlussseite relativ zur ersten Anschlussseite ausgebildet und in der zweiten Anschlussplatte angeordnet ist, wobei in montiertem Zustand der ersten Anschlussseite und der zweiten Anschlussseite aneinander der Stift in die Stiftaufnahme eingreift und vorzugsweise die erste Anschlussplatte der ersten Anschlussseite mit der zweiten Anschlussplatte elektrisch zur Ausbildung eines Massekontakts zwischen den beiden Armmodulen verbindet. Dadurch ist kein zusätzlicher Masseanschluss notwendig.

Ein besonders vorteilhafter Industrieroboter weist einen oben beschriebenen Roboterarm und eine Roboterbasis auf, wobei die erste Anschlussseite des ersten Armmoduls der Roboterbasis zugewandt ist, wobei über die erste Anschlussseite des zweiten Armmoduls und die zweite Anschlussseite des ersten Armmoduls hinweg das Fluid und/oder das optische Signal und/oder das elektrische Signal zwischen der Roboterbasis zugewandten ersten Anschlussseite des ersten Armmoduls und einer der Roboterbasis abgewandten zweiten Anschlussseite des zweiten Armmoduls übertragbar ist.

Nachfolgend wird die Erfindung anhand von Figuren näher erläutert. Dabei zeigen:
Figur 1 eine perspektivische Ansicht eines Industrieroboters gemäß einer ersten Ausführungsform für ein Automatisierungssystem;
Figur 2eine perspektivische Darstellung eines in Figur 1 gezeigten aktiven Armmoduls des Roboterarms gemäß einer ersten Ausführungsform;
Figur 3eine perspektivische Darstellung eines Ausschnitts des in Figur 2 gezeigten aktiven Armmoduls;
Figur 4einen vergrößerten Ausschnitt einer in Figur 3 gezeigten ersten Anschlussseite des aktiven Armmoduls;
Figur 5eine perspektivische Darstellung des in Figur 2 gezeigten aktiven Armmoduls;
Figur 6eine Draufsicht auf eine zweite Anschlussseite des in Figur 2 gezeigten aktiven Armmoduls;
Figur 7eine perspektivische Darstellung der in Figur 6 gezeigten zweiten Anschlussseite des aktiven Armmoduls;
Figur 8einen perspektivischen Halblängsschnitt durch das in Figur 2 gezeigte aktive Armmodul;
Figur 9eine perspektivische Schnittansicht entlang einer in Figur 3 gezeigten Schnittebene X-X durch das in Figur 3 gezeigte aktive Armmodul;
Figur 10 eine Schnittansicht entlang einer in Figur 1 gezeigten Schnittebene Y-Y durch ein erstes aktives Armmodul und ein zweites aktives Armmodul des in Figur 1 gezeigten Roboterarms des Industrieroboters;
Figur 11 eine Schnittansicht entlang einer in Figur 1 gezeigten Schnittebene Z-Z durch das in den Figuren 1 gezeigte erste und zweite aktive Armmodul;
Figur 12 einen in Figur 1 markierten Ausschnitt V des in Figur 1 gezeigten Industrieroboters;
Figur 13 einen Ausschnitt einer Schnittansicht entlang einer in Figur 1 gezeigten Schnittebene W-W durch den in Figur 1 gezeigten Industrieroboter;
Figur 14 eine perspektivische Darstellung eines passiven Armmoduls gemäß einer ersten Ausführungsform.
Figur 15 eine perspektivische Darstellung eines passiven Armmoduls gemäß einer zweiten Ausführungsform.
Figur 16 eine perspektivische Darstellung eines aktiven Armmoduls gemäß einer zweiten Ausführungsform;
Figur 17 einen Längsschnitt durch einen Verbinder eines Roboterarms; und
Figur 18 einen Querschnitt durch einen in Figur 15 gezeigten Spannring des Verbinders.

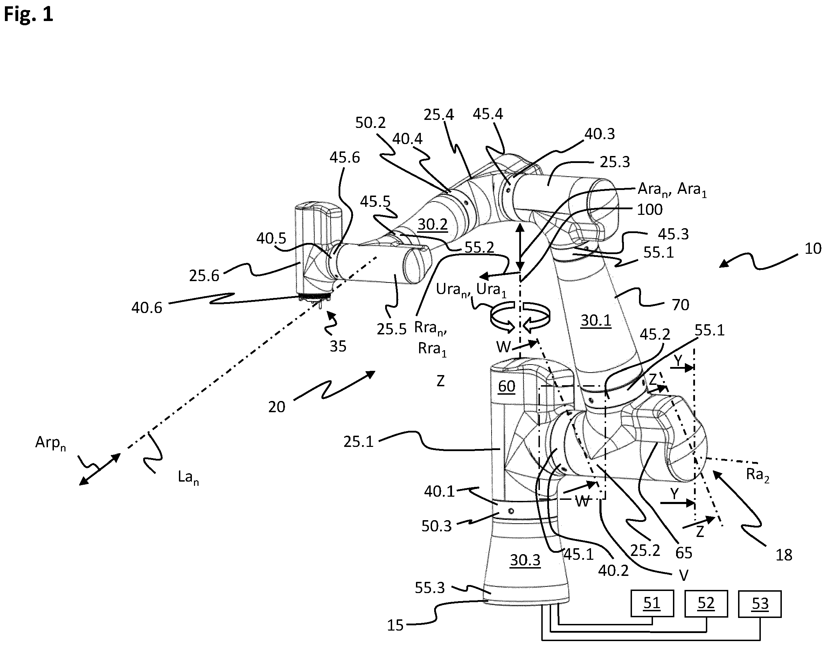

Figur 1 zeigt eine perspektivische Ansicht eines Industrieroboters 10 für ein Automatisierungssystem.

Unter dem Industrieroboter 10 wird eine (automatische) Maschine mit mehreren Freiheitsgraden (in Figur 1 beispielhaft sechs rotatorische Freiheitsgrade) für die Automatisierungstechnik bezeichnet, welche durch eine vorprogrammierte Steuerung/Regelung verschiedene Funktionen in einer Arbeitsumgebung in (bedingter) Eigenleistung durchführen kann. Der Industrieroboter 10 umfasst eine Roboterbasis 15, einen Roboterarm 20 und einen, bevorzugt auswechselbaren, Endeffektor (in Figur 1 nicht dargestellt), auch als Roboterhand bezeichenbar, mit z. B.: einem Werkzeug, einem Greifer etc., welcher an einem freien Ende des Roboterarms 20 angeordnet ist.

Der vorliegende Roboterarm 20 des Industrieroboters 10 ist insbesondere modular aus einem Modulbaukasten mit einer Mehrzahl von Armmodulen 18 ausgebildet. Die Armmodule 18 können als aktives Armmodul 25 oder als passives Armmodul 30 oder als Endeffektor beispielhaft aufgebaut sein. Der Modulbaukasten kann ferner weitere (Arm- und/oder End-)Module aufweisen. Prinzipiell ist der Aufbau des Roboterarms 20 mit aktiven Armmodulen 25 und passiven Armmodulen 30 beliebig wählbar und ist nur hinsichtlich einer maximalen Tragkraft der Armmodule 18 beschränkt.

In Figur 1 sind die aktiven Armmodule 25 nummeriert, wobei in Figur 1 von der Roboterbasis 15 in Richtung des Endeffektors nummeriert ist. Auch die passiven Armmodule 30 sind zur besseren Unterscheidung nummeriert. So ist beispielsweise ein drittes passives Armmodul 30.3 mit der Roboterbasis 15 an einem Ende und an einem anderen Ende mit einem ersten aktiven Armmodul 25.1 verbunden. Das erste aktive Armmodul 25.1 ist an seinem zweiten Ende mit einem zweiten aktiven Armmodul 25.2 verbunden. Zwischen dem zweiten aktiven Armmodul 25.2 und einem dritten aktiven Armmodul 25.3 ist ein erstes passives Armmodul 30.1 angeordnet. Das dritte aktive Armmodul 25.3 ist auf einer dem ersten passiven Armmodul 30.1 abgewandten Seite mit einem vierten aktiven Armmodul 25.4 verbunden, welches auf einer zum dritten aktiven Armmodul 25.3 abgewandten Seite mit einem zweiten passiven Armmodul 30.2 verbunden ist. Das zweite passive Armmodul 30.2 ist mit einem fünften aktiven Armmodul 25.5 verbunden. Auf der zum zweiten passiven Armmodul 30.2 abgewandten Seite ist ein sechstes aktives Armmodul 25.6 angeordnet, an dem auf einer zum fünften aktiven Armmodul 25.5 abgewandten ersten Anschlussseite 40.6 der Endeffektor angeordnet ist. Die erste Anschlussseite 40.6 des sechsten aktiven Armmoduls 25.6 bildet somit eine Endeffektoranschlussseite 35 aus, an der der Endeffektor angeschlossen werden kann. Die aktiven Armmodule 25 weisen jeweils eine Antriebseinrichtung auf, mittels welcher ein daran anschließbares weiteres aktives Armmodul 25 oder ein passives Armmodul 30 um eine zugeordnete Rotationsachse Raₙ des aktiven Armmoduls 25 rotiert werden kann.

Analog dazu wird bei den passiven Armmodulen 30 auf die Antriebseinrichtung verzichtet. Sie sind also als eine Art Verlängerungsteil ausgebildet.

Der Roboterarm 20 umfasst in Abhängigkeit einer Anzahl von aktiven Armmodulen 25 auch eine entsprechende Anzahl von Rotationsachsen Raₙ. D. h., bevorzugt lassen sich eine beliebige Anzahl von vollständigen Umdrehungen eines betreffenden aktiven Armmoduls 25 des Roboterarms 20 in bevorzugt beide Umfangsrichtungen Uraₙ einer betreffenden Rotationsachse Raₙ durchführen.

Ferner bezieht sich die Erläuterung im Folgenden auf ein polares Koordinatensystem jeweils eines aktiven Armmoduls 25. Das polare Koordinatensystem weist dabei jeweils eine im Allgemeinen und nicht auf ein bestimmtes aktives Armmodul 25 verweisende Rotationsachse Raₙ auf. Entlang der Rotationsachse Raₙ verläuft eine Axialrichtung Araₙ des aktiven Armmoduls 25. Senkrecht nach außen bezogen auf die jeweilige Rotationsachse Raₙ verläuft eine Radialrichtung Rraₙ des jeweiligen aktiven Armmoduls 25. Eine Umfangsrichtung Uraₙ des jeweiligen aktiven Armmoduls 25 verläuft auf einer (Kreis-)Bahn um die Rotationsachse Raₙ des aktiven Armmoduls 25. Die allgemeine Nomenklatur wird verwendet, um im Allgemeinen den Aufbau des aktiven Armmoduls 25 zu erläutern.

Im Speziellen sind in Figur 1 die Rotationsachsen Raₙ, die Axialrichtungen Araₙ und die Umfangsrichtungen Uraₙ des jeweiligen aktiven Armmoduls 25 gemäß ihrer Nummerierung bezeichnet. So trägt beispielsweise eine erste Rotationsachse Ra₁ des ersten aktiven Armmoduls 25.1 als Index an der Stelle von n den Index 1. Eine zweite Rotationsachse Ra₂ des zweiten aktiven Armmoduls 25.2 ist entsprechend in Figur 1 beschriftet. Analog sind entsprechend auch die Axialrichtungen Araₙ, die Radialrichtungen Rraₙ und die Umfangsrichtungen Uraₙ der aktiven Armmodule 25 bezeichnet. In Figur 1 sind aus Übersichtlichkeitsgründen nur alle Richtungsangaben (die erste Rotationsachse Rai, die erste Axialrichtung Ara₁ und die erste Umfangsrichtung Ura₁) für das erste aktive Armmodul 25.1 eingezeichnet.

Ferner bezieht sich die Erläuterung im Folgenden auf ein weiteres polares Koordinatensystem jeweils eines passiven Armmoduls 30. Das weitere polare Koordinatensystem weist jeweils eine Längsachse Laₙ auf. Entlang der Längsachse Laₙ verläuft eine Axialrichtung Arpₙ des jeweiligen passiven Armmoduls 30.

Einer jeweiligen Rotationsachse Raₙ des aktiven Armmoduls 25 ist bevorzugt ein Kraft- und/oder Drehmomentsensor sowie ggf. eine erste und/oder zweite Sensoreinrichtung jeweils eines aktiven Armmoduls 25 zugeordnet, mit dem eine Kraft und/oder ein Drehmoment auf das aktive Armmodul 25 sowie eine Position des aktiven Armmoduls 25 gegenüber der Rotationsachse Raₙ erfassbar ist. Die Rotationsachse Raₙ ist beispielhaft als ideelles "Gelenk" (Rotationsgelenk, Drehgelenk und/oder Schwenkgelenk) des mehrgliedrigen bzw. bevorzugt modular aufgebauten Roboterarms 20, z. B. gegenüber der Roboterbasis 15, ausgebildet.

Für die jeweilige Rotationsachse Raₙ kann ein Kraft-, Drehmoment- und/oder Positionssensor für eine Überwachung von am Roboterarm 20 auftretenden Kräften und/oder Drehmomenten und/oder einer Relativposition der Armmodule 18 zueinander vorgesehen sein. Dies kann auch auf einen Abschnitt des Roboterarms 20 beschränkbar sein.

Vorliegend weist ein bestimmter Modulbaukasten für einen Roboterarm 20 wenigstens einen Typ eines beispielweise I-, J-, L- bzw. T-förmig ausgebildeten, aktiven Armmoduls 25 und vorzugsweise wenigstens einen Typ eines beispielsweise I-, J-, L- bzw. T-förmig ausgebildeten, passiven Armmoduls 30 auf. Beispielhaft sind in Figur 1 die aktiven Armmodule 25 J- oder L-förmig ausgebildet, während hingegen die passiven Armmodule 30 beispielhaft I-förmig ausgebildet sind.

In Figur 1 sind bevorzugt sämtliche Armmodule 18 des Modulbaukastens für Roboterarme 20 derart ausgebildet, dass jedes der Armmodule 18 jeweils wenigstens zwei erste, zweite, dritte und/oder vierte Anschlussseiten 40, 45, 50, 55 aufweist. Die ersten bis vierten Anschlussseiten 40, 45, 50, 55 der Armmodule 18 können miteinander korrespondieren und miteinander verbunden werden. Dabei weist beispielhaft jedes aktive Armmodul 25 eine erste Anschlussseite 40 und eine zweite Anschlussseite 45 auf. Jedes passive Armmodul 30 weist eine dritte Anschlussseite 50 und eine vierte Anschlussseite 55 auf. Es ist jedoch auch möglich, dass jedes aktive Armmodul 25 zwei erste Anschlussseiten 40 oder zwei zweite Anschlussseiten 45 aufweist. Analog ist es auch möglich, dass jedes passive Armmodul 30 zwei dritte Anschlussseiten 50 oder zwei vierte Anschlussseiten 55 aufweist.

Zur eindeutigen Identifizierung der jeweiligen ersten bis vierten Anschlussseite 40, 45, 50, 55 erfolgt die Zuordnung der ersten bis vierten Anschlussseiten 40, 45, 50, 55 korrespondierend zu der Nummerierung der aktiven Armmodule 25 oder der passiven Armmodule 30. So ist die erste Anschlussseite des ersten aktiven Armmoduls 25.1 mit dem Bezugszeichen 40.1 in Figur 1 bezeichnet.

Die erste Anschlussseite 40, die zweite Anschlussseite 45, die dritten Anschlussseiten 50 und die vierten Anschlussseiten 55 sind korrespondierend zueinander ausgebildet. D. h., dass an jede erste Anschlussseite 40 eines aktiven Armmoduls 25 eine zweite Anschlussseite 45 eines anderen aktiven Armmoduls 25 oder eine dritte Anschlussseite 50 eines passiven Armmoduls 30 anschließbar wäre. Ebenso wäre an jede zweite Anschlussseite 45 eines aktiven Armmoduls 25 eine erste Anschlussseite 40 eines anderen aktiven Armmoduls 25 oder eine vierte Anschlussseite 55 eines passiven Armmoduls 30 anschließbar.

In Figur 1 ist beispielhaft die vierte Anschlussseite 55.3 des dritten passiven Armmoduls 30.3 mit der Roboterbasis 15 verbunden. Neben der mechanischen Verbindung der vierten Anschlussseite 55.3 des dritten passiven Armmoduls 30.3 zur Abstützung von Kräften und Drehmomenten aus dem Roboterarm 20 an der Roboterbasis 15 wird über die vierte Anschlussseite 55.3 des dritten passiven Armmoduls 30.3 der Roboterarm 20 mit einem (Druck-)Fluid 51, insbesondere mit Druckluft oder einer mit Druck beaufschlagten Hydraulikflüssigkeit, versorgt, das über die vierte Anschlussseite 55.3 des dritten passiven Armmoduls 30.3 in den Roboterarm 20 eingeleitet wird. Ferner ist über die vierte Anschlussseite 55.3 des dritten passiven Armmoduls 30.3 der Roboterarm 20 mit einer elektrischen Energiequelle 52 leistungstechnisch elektrisch und mit einem Datennetzwerk 53 datentechnisch verbunden.

Eine zweite Anschlussseite 45.1 des ersten aktiven Armmoduls 25.1 ist mit einer ersten Anschlussseite 40.2 des zweiten aktiven Armmoduls 25.2 verbunden. Zwischen einer zweiten Anschlussseite 45.2 des zweiten aktiven Armmoduls 25.2 und einer zweiten Anschlussseite 45.3 des dritten aktiven Armmoduls 25.3 ist das erste passive Armmodul 30.1 angeordnet, wobei eine vierte Anschlussseite 55.1 des ersten passiven Armmoduls 30.1 mit der zweiten Anschlussseite 45.2 des zweiten aktiven Armmoduls 25.2 an einem Ende und am anderen Ende eine weitere vierte Anschlussseite 55.1 des ersten passiven Armmoduls 30.1 mit einer zweiten Anschlussseite 45.3 des dritten aktiven Armmoduls 25.3 verbunden ist. In der Ausführungsform sind somit beispielhaft beide Anschlussseiten des ersten passiven Armmoduls 30.1 als vierte Anschlussseiten 55.1 des ersten passiven Armmoduls 30.1 und somit korrespondierend und/oder komplementär zu der zweiten Anschlussseite 45.2 des zweiten aktiven Armmoduls 25.2 und der zweiten Anschlussseite 45.3 des dritten aktiven Armmoduls 25.3 ausgebildet. Dadurch kann die zweite Anschlussseite 45.2 des zweiten aktiven Armmoduls 25.2 zu der zweiten Anschlussseite 45.3 des dritten aktiven Armmoduls 25.3 auf einfache Weise beabstandet angeordnet sein und eine vordefinierte Gestaltung des Roboterarms 20 auf einfache Weise umgesetzt werden. Beispielhaft ist in Figur 1 eine erste Anschlussseite 40.3 des dritten aktiven Armmoduls 25.3 mit einer zweiten Anschlussseite 45.4 eines vierten aktiven Armmoduls 25.4 verbunden.

Ein zweites passives Armmodul 30.2 ist beispielhaft unterschiedlich in dem Modulbaukasten zu dem ersten passiven Armmodul 30.1 ausgebildet. In Axialrichtung des zweiten passiven Armmoduls 30.2 ist das zweite passive Armmodul 30.2 kürzer als das erste passive Armmodul 30.1 ausgebildet. Ferner ist eine dritte Anschlussseite 50.2 des zweiten passiven Armmoduls 30.2 identisch zu der zweiten Anschlussseite 45.4 des vierten aktiven Armmoduls 25.4 und eine vierte Anschlussseite 55.2 des zweiten passiven Armmoduls 30.2 korrespondierend und/oder komplementär zu der zweiten Anschlussseite 45.5 des fünften aktiven Armmoduls 25.5 und somit identisch zu der ersten Anschlussseite 40.5 des fünften aktiven Armmoduls 25.5 ausgebildet. Somit weist im Unterschied zu dem ersten passiven Armmodul 30.1 das zweite passive Armmodul 30.2 an seinen Enden jeweils die dritte Anschlussseite 50.2 und die vierte Anschlussseite 55.2 des zweiten passiven Armmoduls 30.2 auf, die zueinander unterschiedlich sind.

An der ersten Anschlussseite 40.5 des fünften aktiven Armmoduls 25.5 ist das fünfte aktive Armmodul 25.5 mit einer zweiten Anschlussseite 45.6 des sechsten aktiven Armmoduls 25.6 verbunden. Eine erste Anschlussseite 40.6 des sechsten aktiven Armmoduls 25.6 ist mit dem Endeffektor verbunden.

Über die Armmodule 18 und deren ersten bis vierten Anschlussseiten 40, 45, 50, 55 wird der Endeffektor wie im Weiteren noch ausführlich beschrieben mit dem Fluid 51 versorgt und ist mit der elektrischen Energiequelle 52 elektrisch und mit dem Datennetzwerk 53 datentechnisch verbunden. Ebenso sind die aktiven und passiven Armmodule 25, 30 über ihre ersten bis vierten Anschlussseiten 40, 45, 50, 55 mit dem Datennetzwerk 53, beispielsweise mit einem Feldbus oder einem EtherCAT-Netzwerk, datentechnisch und mit der elektrischen Energiequelle 52 leistungstechnisch verbunden. Jedes der aktiven Armmodule 25 weist ein erstes Gehäuse 60 auf, wobei jedes der ersten Gehäuse 60 jeweils einen ersten Gehäuseinnenraum 65 innenseitig begrenzt. An einem Ende des ersten Gehäuses 60 ist jeweils die erste Anschlussseite 40 angeordnet. Die erste Anschlussseite 40 ist drehbar um die Rotationsachse Raₙ gegenüber dem ersten Gehäuse 60 gelagert und wird steuerbar durch die Antriebseinrichtung des jeweiligen aktiven Armmoduls 25 angetrieben. Die zweite Anschlussseite 45 ist beispielsweise geneigt, vorzugsweise senkrecht gegenüber der ersten Anschlussseite 40 ausgerichtet und drehfest mit dem ersten Gehäuse 60 verbunden. Im ersten Gehäuseinnenraum 65 sind Mittel zur fluidischen, elektrischen und datentechnischen Verbindung der ersten Anschlussseite 40 mit der zweiten Anschlussseite 45 angeordnet, auf die detailliert an späterer Stelle eingegangen wird.

Bei Aktivierung der Antriebseinrichtung des aktiven Armmoduls 25 verdreht die Antriebseinrichtung die erste Anschlussseite 40 relativ zum ersten Gehäuse 60. Je nach Ausgestaltung des Roboterarms 20 verschwenkt die Antriebseinrichtung somit das aktive Armmodul 25 mit Ausnahme der eigenen ersten Anschlussseite 40 um die zugeordnete Rotationsachse Raₙ oder nur die erste Anschlussseite 40 um die zugeordnete Rotationsache Raₙ.

In Figur 1 verschwenkt beispielsweise die Antriebseinrichtung des ersten aktiven Armmoduls 25.1 das erste aktive Armmodul 25.1 und die an der zweiten Anschlussseite 45.1 des ersten aktiven Armmoduls 25.1 weiter befestigten Armmodule 18 und den Endeffektor um die erste Rotationsachse Ra₁. Das sechste aktive Armmodul 25.6 ist beispielhaft gegenüber dem ersten aktiven Armmodul 25.1 identisch ausgerichtet montiert. Die Antriebseinrichtung des sechsten aktiven Armmoduls 25.6 treibt beispielsweise die erste Anschlussseite 40.6 an und rotiert den an der ersten Anschlussseite 40.6 des sechsten aktiven Armmoduls 25.6 befestigten Endeffektor. Das erste Gehäuse 60 und die zweite Anschlussseite 45.6 des sechsten aktiven Armmoduls 25.6 sind dabei ortsfest.

Bei dem in Figur 1 gezeigten Roboterarm 20 ist die erste Rotationsachse Ra₁ beispielhaft nicht beschränkt, d.h. dass der Roboterarm 10 dauerhaft in die gleiche Umfangsrichtung Ura₁ rotiert werden kann. Dadurch kann mittels der in Figur 1 gezeigten Armmmodule 18 ein beliebig ausgebildeter Roboterarm 20 ausgebildet werden, der zahlreiche gängigen Kinematiken abbilden kann.

Es ist natürlich möglich, die jeweilige Rotationsachse Raₙ auch nur als eine Schwenkachse auszubilden, d. h. eine Bewegung des betreffenden aktiven Armmoduls 25 ist auf einen bestimmten Winkel beschränkt, wie z. B. auf Winkel kleiner als: 720°, 540°, 360°, 270°, 180°, 90° oder 45°. In Figur 1 ist vorzugweise beispielsweise die zweite Rotationsachse Ra₂ auf einen vordefinierten Winkel von beispielsweise 180° beschränkt, um ein Anschlagen des Roboterarms 20 an der Roboterbasis 15 zu verhindern. Auch kann eine Beschränkung der Bewegung der aktiven Armmodule 25 dahingehend erfolgen, dass die Armmodule 18 nicht aneinander kollidieren. Die Beschränkung kann mechanisch oder steuertechnisch, insbesondere softwaretechnisch, erfolgen.

Die passiven Armmodule 30 weisen jeweils ein zweites Gehäuse 70 auf, wobei das zweite Gehäuse 70 hohlkörperartig ausgebildet ist und sich entlang der Längsachse Laₙ in Axialrichtung Arpₙ erstreckt. In Figur 1 ist beispielhaft das zweite Gehäuse 70 kegelstumpfartig mit einem kreisförmigen Querschnitt ausgebildet. Die dritte Anschlussseite 50 des passiven Armmoduls 30 ist drehfest mit dem zweiten Gehäuse 70 an einem stirnseitigen Ende des zweiten Gehäuses 70 angeordnet und drehfest mit dem zweiten Gehäuse 70 verbunden. An einem anderen stirnseitigen Ende des zweiten Gehäuses 70 ist die vierte Anschlussseite 55 des passiven Armmoduls 30 angeordnet und drehfest mit dem zweiten Gehäuse 70 verbunden. Dabei weist durch die hohlkörperartige Ausgestaltung des zweiten Gehäuses 70 das zweite Gehäuse 70 eine besonders hohe Biege- und Torsionssteifigkeit auf, sodass das passive Armmodul 30 eine hohe Last übertragen kann.

Im Modulbaukasten kann das Armmodul 18 unterschiedliche Größen aufweisen. Insbesondere kann das erste oder zweite Gehäuse 60, 70 verschiedene Längen und/oder unterschiedliche Querschnittsflächen der ersten bis vierten Anschlussseiten 40, 45, 50, 55 aufweisen, um so eine gewünschte geometrische Ausgestaltung des Roboterarms 20 bei der Kombination der Armmodule 18 aus dem Modulbaukasten auf einfache Weise zu erhalten.

Der Modulbaukasten kann dabei derart gestaltet sein, dass die Armmodule 18 jeweils unterschiedlichen Baugruppen angehören, die unterschiedliche geometrische Ausgestaltungen aufweisen, jedoch funktionell identisch zueinander aufgebaut sind.

In der Ausführungsform sind das erste aktive Armmodul 25.1 und das zweite aktive Armmodul 25.2 identisch ausgebildet und weisen in konstruktiver Ausgestaltung die gleiche geometrische Ausgestaltung auf. In Figur 1 gehören das erste aktive Armmodul 25.1 und das zweite aktive Armmodul 25.2 zu einer ersten Baugruppe, die geometrisch die größte Ausgestaltung und die größte Erstreckung aufweist.

Das dritte aktive Armmodul 25.3 und das vierte aktive Armmodul 25.4 sind geometrisch in der konstruktiven Ausgestaltung kleiner ausgebildet als das erste und zweite aktive Armmodul 25.1, 25.2, damit Momente und Kräfte für das erste und zweite aktive Armmodul 25.1 und 25.2 reduziert sind. Sie gehören einer zweiten Baugruppe an. Ebenso sind das fünfte aktive Armmodul 25.5 und das sechste aktive Armmodul 25.6 einer dritten Baugruppe zugehörig, die die kleinste Ausgestaltung aufweist. Dadurch, dass die Armmodule 18 mit zunehmendem Abstand von der Roboterbasis 15 kleineren Baugruppen zugehören, wird das an der Roboterbasis 15 angeschlossene passive Armmodul 30, in der Ausführungsform das dritte passive Armmodul 30.3, mechanisch entlastet.

Die oben beschriebene Ausgestaltung des Modulbaukastens hat den Vorteil, dass auf einfache Weise mittels der einzelnen aktiven Armmodule 25 und gegebenenfalls mindestens einem passiven Armmodul 30 ein mehrachsiger Roboterarm 20 individuell auf die Bedürfnisse aus den aktiven bzw. passiven Armmodulen 25, 30 des Modulbaukastens maßgeschneidert zusammengestellt werden kann.

Durch die Fertigung der Armmodule 18 unabhängig von dem Roboterarm 20 kann der in Figur 1 gezeigte Industrieroboter 10 in besonders kurzer Zeit (innerhalb weniger Minuten) montiert werden. Auch kann nach Fertigstellung des Industrieroboters 10 der Industrieroboter 10 durch weitere (Arm-)Module des Modulbaukastens zur Anpassung des Industrieroboters 10 an eine andere Aufgabe flexibel angepasst und gegebenenfalls erweitert oder reduziert werden. So kann ein bestehender vier Rotationsachsen Raₙ aufweisender Roboterarm (nicht in Figur 1 gezeigt) durch zwei zusätzlich (gegebenenfalls nachträglich) zwischen dem Endeffektor und den bestehenden Armmodulen 18 montierte aktive Armmodule 25, beispielsweise auf den in Figur 1 gezeigten Industrieroboter 10, umgebaut werden.

Ferner kann auf die Anordnung von Leitungen, Kabeln oder anderen Verbindungsmitteln außenseitig an dem Industrieroboter 10 durch die innenseitige Führung des Fluids 51, der elektrischen Energie und die datentechnische Verbindung verzichtet werden, sodass eine ungewollte Beschädigung des Industrieroboters 10 vermieden werden kann.

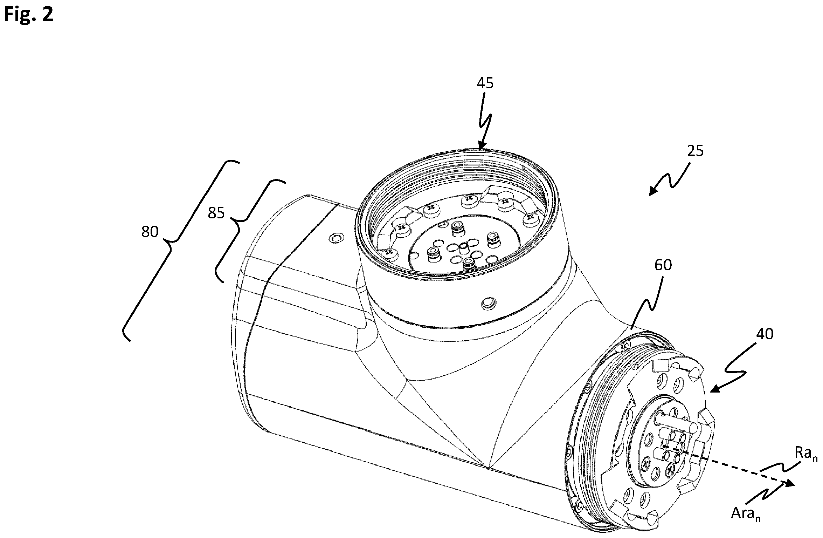

Figur 2 zeigt eine perspektivische Darstellung des in Figur 1 gezeigten aktiven Armmoduls 25.

Das aktive Armmodul 25 ist auch über die Baugruppen hinweg jeweils identisch aufgebaut, wobei jedoch abweichend dadurch nur die geometrische Ausgestaltung entsprechend angepasst ist. Mit anderen Worten sind die aktiven J-förmig ausgebildeten aktiven Armmodule 25 der unterschiedlichen Baugruppen gegenüber einander skaliert ausgebildet.

In der Ausführungsform ist die erste Anschlussseite 40 in einer Rotationsebene senkrecht zu der Rotationsachse Raₙ angeordnet. Die zweite Anschlussseite 45 ist geneigt radial außen zu der Rotationsachse Raₙ angeordnet und geneigt, vorzugsweise senkrecht, zu der ersten Anschlussseite 40 ausgerichtet.

Das erste Gehäuse 60 weist einen im Wesentlichen zylinderförmig ausgebildeten ersten Gehäuseabschnitt 80 auf. Der erste Gehäuseabschnitt 80 erstreckt sich im Wesentlichen um die Rotationsachse Raₙ. Seitlich an einer Umfangsseite des ersten Gehäuseabschnitts 80 ist am ersten Gehäuseabschnitt 80 ein zweiter Gehäuseabschnitt 85 angeordnet, wobei in Axialrichtung Araₙ der zweite Gehäuseabschnitt 85 schmaler ausgebildet ist als der erste Gehäuseabschnitt 80. Der zweite Gehäuseabschnitt 85 ist im Wesentlichen wannenförmig ausgebildet. An einer dem ersten Gehäuseabschnitt 80 abgewandten Seite ist die zweite Anschlussseite 45 am zweiten Gehäuseabschnitt 85 angeordnet. Dabei ragt die zweite Anschlussseite 45 über den zweiten Gehäuseabschnitt 85 heraus. Die zweite Anschlussseite 45 kann außermittig bezogen auf eine maximale Längserstreckung in Axialrichtung Araₙ angeordnet sein. Besonders kompakt und eine besonders günstige Kraftübertragung zwischen der ersten Anschlussseite 40 und der zweiten Anschlussseite 45 ist gegeben, wenn in Axialrichtung Araₙ die zweite Anschlussseite 45 anschließend an die erste Anschlussseite 40 am ersten Gehäuse 60 angeordnet ist. Insbesondere ist dadurch eine Biegebeanspruchung des ersten Gehäuses 60 zur Kraftübertragung besonders gering.

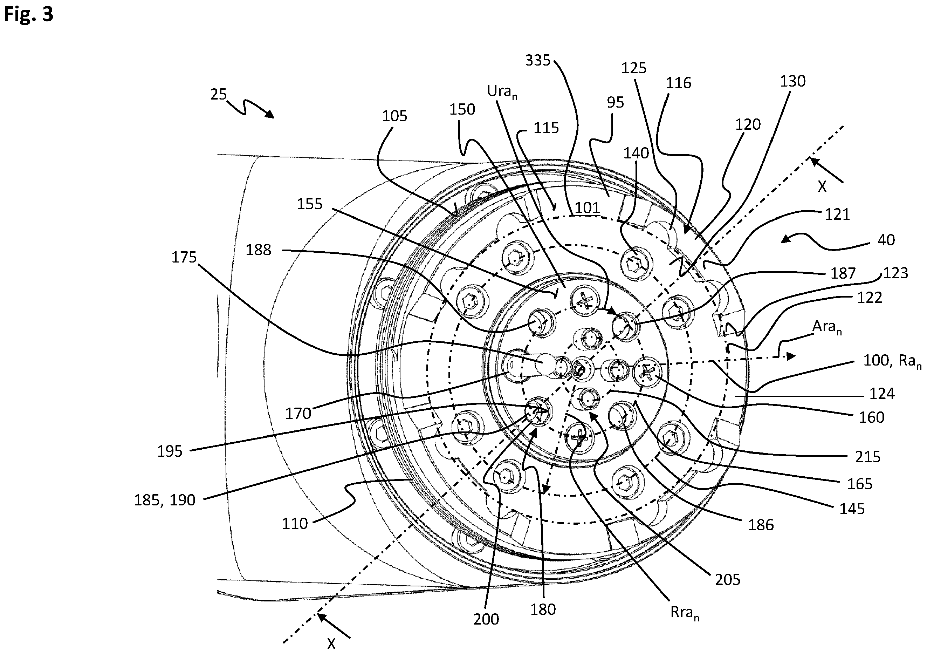

Figur 3 zeigt eine perspektivische Darstellung eines Ausschnitts des aktiven Armmoduls 25.

Die erste Anschlussseite 40 weist eine erste Anschlussplatte 95 auf. Die erste Anschlussplatte 95 ist beispielhaft kreisförmig in der Draufsicht ausgebildet und erstreckt sich senkrecht zu einer ersten Montageachse 100, wobei die erste Montageachse 100 bei einer Ausgestaltung des Armmoduls als aktives Armmodul 25 als Rotationsachse Raₙ ausgebildet ist. Mit anderen Worten überdecken sich die erste Montageachse 100 und die Rotationsachse Raₙ.

An einer ersten äußeren Umfangsseite 105 weist die erste Anschlussplatte 95 vorzugsweise ein Außengewinde 110 auf. Das Außengewinde 110 ist mehrgängig ausgebildet. Von besonderem Vorteil ist hierbei, wenn das Außengewinde 110 wenigstens drei-, vorzugsweise viergängig ist. Ferner ist von Vorteil, wenn das Außengewinde 110 als Feingewinde ausgebildet ist.

Die erste Anschlussseite 40 weist eine erste Kontaktseite 101 auf. Die erste Kontaktseite 101 weist eine erste Stirnseite 115 und eine zweite Stirnseite 155 auf, wobei die erste Stirnseite 115 radial außen zur zweiten Stirnseite 155 angeordnet ist.

In Radialrichtung Rraₙ schließt sich nach innen hin an die erste äußere Umfangsseite 105 an der ersten Stirnseite 115 der ersten Anschlussplatte 95 eine erste Stirnverzahnung 116 an. Die erste Stirnverzahnung 116 ist in der Ausführungsform als selbstzentrierende Stirnverzahnung beispielhaft als Hirth-Verzahnung ausgebildet. Dabei weist die erste Stirnverzahnung 116 mehrere in Umfangsrichtung versetzt angeordnete erste Zähne 120 auf, die in der Ausführungsform beispielhaft identisch zueinander ausgebildet sind. Ein erster Zahnkopf 121 des ersten Zahns 120 ist plan ausgebildet und verläuft in einer Rotationsebene senkrecht zu der Rotationsachse Raₙ und somit parallel zu der ersten Stirnseite 115. Ein erster Zahngrund 122, der in Umfangsrichtung Uraₙ zwischen zwei ersten Zähnen 120 angeordnet ist, wird durch die erste Stirnseite 115 ausgebildet. Jede der ersten Zahnflanken 123 des ersten Zahns 120 ist hin zur Rotationsachse Raₙ mit wenigstens einer Richtung orientiert. Der erste Zahngrund 122 ist in Umfangsrichtung zwischen zwei zugewandten ersten Zahnflanken 122 angeordnet. Zwischen zwei ersten Zähnen 120 ist jeweils ein erster Zahnzwischenraum 124 angeordnet, der in Umfangsrichtung durch die ersten Zahnflanken 123 und in axialer Richtung durch den ersten Zahngrund 122 begrenzt wird.

Beispielsweise radial innenseitig zu der ersten Stirnverzahnung 116 ist wenigstens ein erstes Befestigungsmittel 140 angeordnet. Das erste Befestigungsmittel 140 kann beispielsweise als erste Schraube ausgebildet sein. Ein erster Schraubenkopf der ersten Schraube kann in der ersten Anschlussplatte 95 versenkt sein. Vorzugsweise sind mehrere erste Befestigungsmittel 140 an der ersten Anschlussplatte 95 angeordnet, wobei jedes der ersten Befestigungsmittel 140 radial innenseitig zum ersten Zahn 120 angeordnet ist. Das erste Befestigungsmittel 140 ist auf einer ersten Kreisbahn 145 um die Rotationsachse Raₙ verlaufend angeordnet. Dabei sind beispielhaft pro ersten Zahn 120 jeweils zwei erste Befestigungsmittel 140 radial innenseitig eines ersten Zahns 120 angeordnet. Ferner kann in dem ersten Zahn 120 wenigstens eine erste Einbuchtung 125 angeordnet sein. Die erste Einbuchtung 125 kann bohrungsartig ausgebildet sein. Die erste Einbuchtung 125 kann radial nach innen zu einer inneren Zahnumfangsseite 130 des ersten Zahns 120 offen sein. In Axialrichtung Araₙ erstreckt sich die erste Einbuchtung 125 bis etwa auf Höhe der ersten Stirnseite 125, sodass ein Einbuchtungsgrund der ersten Einbuchtung 125 und die erste Stirnseite 115 stufenlos übergehen. In der Ausführungsform sind beispielhaft pro ersten Zahn 120 jeweils zwei identisch zueinander ausgebildete erste Einbuchtungen 125 vorgesehen. Die ersten Einbuchtungen 125 können auf einer gemeinsamen vierten Kreisbahn 335 um die Rotationsachse Raₙ angeordnet sein.

Radial innenseitig zu dem ersten Befestigungsmittel 140 weist die erste Anschlussseite 40 ein erstes Anschlusselement 150 auf. Das erste Anschlusselement 150 weist die zweite Stirnseite 155 auf, wobei die zweite Stirnseite 155 parallel verlaufend zur ersten Stirnseite 115 ausgebildet ist. Das erste Anschlusselement 150 ist mittels wenigstens eines zweiten Befestigungsmittels 160, vorzugsweise mehrere in Umfangsrichtung Uraₙ versetzt zueinander auf einer zweiten Kreisbahn 165 um die Rotationsachse Raₙ, angeordnet. Das zweite Befestigungsmittel 160 ist beispielsweise als zweite Schraube ausgebildet, wobei ein zweiter Schraubenkopf des zweiten Befestigungsmittels 160 in dem ersten Anschlusselement 150 versenkt ist.

Die zweite Kreisbahn 165 und die erste Kreisbahn 145 sind konzentrisch zueinander angeordnet. Dabei liegt jeweils ein Mittelpunkt auf der Rotationsachse Raₙ und somit auf der ersten Montageachse 100. In Umfangsrichtung Uraₙ sind beispielsweise drei zweite Befestigungsmittel 160 in jeweils 90°-Winkel bezogen auf die Rotationsachse Raₙ zueinander angeordnet, sodass zwischen zwei zweiten Befestigungsmitteln 160 ein Winkel von 180° beispielhaft vorliegt.

Das erste Anschlusselement 150 weist in Umfangsrichtung Uraₙ zwischen den beiden zweiten Befestigungsmitteln 160, die beispielhaft im 180°-Abstand zueinander angeordnet sind, eine erste Stiftaufnahme 170 auf. Die erste Stiftaufnahme 170 ist beispielhaft als Durchgangsöffnung ausgebildet und in Umfangsrichtung Uraₙ mittig auf der zweiten Kreisbahn 165 zwischen den beiden um beispielhaft 180° angeordneten zweiten Befestigungsmitteln 160 angeordnet.

Die erste Anschlussseite 40 weist ferner einen Stift 175 auf, wobei der Stift 175 rückseitig (in Figur 3 nicht dargestellt) in die erste Anschlussplatte 95 eingeschraubt ist. Dabei durchgreift der Stift 175 die erste Stiftaufnahme 170 und befestigt zusammen mit den zweiten Befestigungsmitteln 160 das erste Anschlusselement 150 an der ersten Anschlussplatte 95. Der Stift 175 ragt über die zweite Stirnseite 155 und erstreckt sich parallel zu der ersten Montageachse 100 bzw. der Rotationsachse Raₙ.

Die erste Anschlussplatte 95 weist wenigstens einen der folgenden ersten Werkstoffe auf: Metall, Aluminium, Stahl, Titan-Aluminiumlegierung, hochfeste Aluminiumlegierung, AW7075, faserverstärkter Kunststoff, Glasfaserverstärkter Kunststoff (GfK), Kohlenstofffaserverstärkter Kunststoff (CfK). Das erste Anschlusselement 150 weist wenigstens einen der zweiten folgenden Werkstoffe auf: ein elektrisch nicht leitfähiges Material, Kunststoff, Thermoplast, Polyamid, PA GF30, PA6 GF 30. Der Stift 175 weist wenigstens einen der folgenden dritten Werkstoffe auf: Metall, Aluminium, Stahl, elektrisch leitfähiger Kunststoff, Messing, Kupfer. Dadurch, dass rückseitig der Stift 175 in die erste Anschlussplatte 95 eingeschraubt ist, ist der Stift 175 elektrisch mit der ersten Anschlussplatte 95 verbunden. Ferner befestigt der Stift 175 das erste Anschlusselement 150 an der ersten Anschlussplatte 95.

Das erste Anschlusselement 150 weist ferner eine erste Fluidkontakteinrichtung 180 auf. Die erste Fluidkontakteinrichtung 180 ist in der Ausführungsform beispielhaft als Buchse bzw. Weibchen ausgebildet. Dabei weist die erste Fluidkontakteinrichtung 180 wenigstens einen ersten Fluidkontakt 185 auf. In der beispielhaften Ausführungsform weist die Fluidkontakteinrichtung 180 neben dem ersten Fluidkontakt 185 noch einen zweiten bis vierten Fluidkontakt 186 bis 188 auf.

Jeder der ersten bis vierten Fluidkontakte 185 bis 188 ist vom jeweils anderen ersten bis vierten Fluidkontakt 185 bis 188 fluidisch getrennt. Der erste bis vierte Fluidkontakt 185 bis 188 wird in der Ausführungsform durch eine als Sackloch in dem ersten Anschlusselement 150 ausgebildete Rohraufnahme 190 ausgebildet. Die ersten bis vierten Fluidkontakte 185 bis 188 sind identisch zueinander ausgebildet.

Die Rohraufnahme 190 mündet an der zweiten Stirnseite 155. Die Rohraufnahme 190 weist an einer ersten inneren Umfangsseite eine Dichtfläche 195 auf. An einem Grund der Rohraufnahme 190 mündet jeweils ein Fluidverbindungskanal 200. Die Fluidverbindungskanäle 200 verlaufen fluidisch getrennt zueinander in der ersten Anschlussplatte 95. In Umfangsrichtung Uraₙ sind der erste bis vierte Fluidkontakt 185 bis 188 zumindest teilweise auf der zweiten Kreisbahn 165 angeordnet. Dabei sind der erste bis vierte Fluidkontakt 185 bis 188 bezogen auf die zweite Kreisbahn 165 mit ihrer Mittelachse geringfügig nach innen hin versetzt angeordnet.

In Umfangsrichtung Uraₙ sind die ersten bis vierten Fluidkontakte 185 bis 188 um 90° zueinander versetzt angeordnet. Dabei sind beispielhaft jeweils einer der ersten bis vierten Fluidkontakte 185 bis 188 in Umfangsrichtung Uraₙ mittig zwischen zwei zweiten Befestigungsmitteln 160 bzw. mittig zwischen dem Stift 175 und einem in Umfangsrichtung Uraₙ nächstliegend zu dem Stift 175 angeordneten zweiten Befestigungsmittel 160 angeordnet.

Radial innenseitig zu der zweiten Kreisbahn 165 und somit auch zu der ersten Fluidkontakteinrichtung 180 und dem zweiten Befestigungsmittel 160 weist die erste Anschlussseite 40 an dem ersten Anschlusselement 150 eine erste Leistungskontakteinrichtung 205 auf.

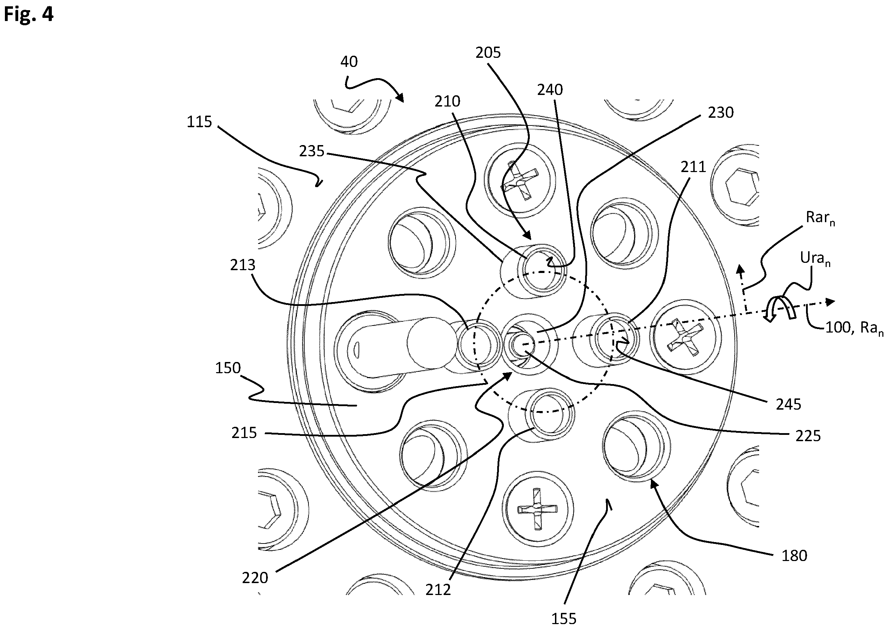

Figur 4 zeigt einen vergrößerten Ausschnitt der in Figur 3 gezeigten ersten Anschlussseite 40 des aktiven Armmoduls 25.

Die erste Anschlussseite 40 weist ferner eine erste Kontakteinrichtung 220 auf, wobei die erste Kontakteinrichtung 220 zur Datenübertragung ausgebildet ist und beispielhaft ein erstes Kontaktelement 225 aufweist. Das erste Kontaktelement 225 ist auf der ersten Montageachse 100 verlaufend angeordnet und erstreckt sich längs der ersten Montageachse 100. Das erste Kontaktelement 225 ist beispielhaft lichtleitend und zur Übertragung des optischen Signals ausgebildet.

Die erste Kontakteinrichtung 220 ist als Buchse ausgebildet und weist eine Kontaktaufnahme 230 auf, wobei die Kontaktaufnahme 230 sacklochartig in dem ersten Anschlusselement 150 ausgebildet ist, wobei sich das erste Kontaktelement 225 in der Kontaktaufnahme 230 erstreckt. Die erste Kontaktaufnahme 230 mündet an der zweiten Stirnseite 155.

Durch die mittige Anordnung der ersten Kontakteinrichtung 220 zur Datenübertragung ist die erste Leistungskontakteinrichtung 205 in Radialrichtung Rraₙ zwischen der ersten Fluidkontakteinrichtung 180 und der ersten Kontakteinrichtung 220 angeordnet. Diese Ausgestaltung hat den Vorteil, dass die erste Anschlussseite 40 in Radialrichtung Rraₙ einen besonders niedrigen Bauraumbedarf aufweist.

Die erste Leistungskontakteinrichtung 205 weist beispielhaft neben einem ersten Leistungskontakt 210 wenigstens einen zweiten Leistungskontakt 211, vorzugsweise auch einen dritten und vierten Leistungskontakt 212, 213 auf. Der erste bis vierte Leistungskontakt 210 bis 213 sind jeweils in Umfangsrichtung Uraₙ beispielhaft in einem 90°-Winkel versetzt zueinander angeordnet. Für jeden ersten bis vierten Leistungskontakt 210, 211, 212, 213 weist das Anschlusselement 150 eine erste Leistungskontaktaufnahme 235 auf. Die erste Leistungskontaktaufnahme 235 ist als Durchgangsöffnung in dem ersten Anschlusselement 150 ausgebildet. Die erste Leistungskontaktaufnahme 235 mündet in der zweiten Stirnseite 155. Jeder des ersten bis vierten Leistungskontakts 210 bis 213 ist beispielhaft identisch zu dem anderen ersten bis vierten Leistungskontakt 210 bis 213 ausgebildet.

Jeder erste bis vierte Leistungskontakt 210 bis 213 ist buchsenförmig ausgebildet. Der erste bis vierte Leistungskontakt 210 bis 213 ragt über die erste Stirnseite 155 hinaus und weist an einer inneren Umfangsseite jeweils eine zugeordnete Kontaktfläche 240, 245 auf. Die Kontaktfläche 240, 245 ist zylinderförmig ausgebildet. Die Kontaktfläche 240, 245 kann sich weiter über einen Boden des ersten bis vierten Leistungskontakts 210 bis 213 erstrecken. So weist beispielsweise der erste Leistungskontakt 210 eine erste Kontaktfläche 240 und der zweite Leistungskontakt 211 eine zweite Kontaktfläche 245 auf.

Beispielhaft kann der erste Leistungskontakt 210 mit einem im Allgemeinen als ersten Anschluss bezeichneten ersten Pol und der zweite Leistungskontakt 211 mit einem im Allgemeinen als zweiten Anschluss bezeichneten zweiten Pol der elektrischen Energiequelle verbunden werden.

In der Draufsicht sind der erste bis vierte Leistungskontakt 210 bis 213 kreisförmig ausgebildet. Dabei ist eine Querschnittsfläche deutlich kleiner als die des ersten bis vierten Fluidkontakts. Elektrisch werden der erste bis vierte Leistungskontakt 210 bis 213 durch das elektrisch nicht leitfähige erste Anschlusselement 150 gegenüber einander elektrisch isoliert.

Dabei ist beispielhaft in Umfangsrichtung Uraₙ jeweils der erste bis vierte Leistungskontakt 210 bis 213 gemeinsam in einer Ebene, in der die Rotationsachse Raₙ und das zweite Befestigungsmittel 160 angeordnet sind, angeordnet. Die ersten bis vierten Leistungskontakte 210 bis 213 sind beispielsweise konzentrisch auf einer dritten Kreisbahn 215 um die erste Montageachse 100 bzw. die Rotationsachse Raₙ angeordnet. Die erste Leistungskontakteinrichtung 205 ist ausgebildet, eine elektrische Leistung, beispielsweise zur Versorgung des aktiven Armmoduls 25 und/oder des passiven Armmoduls, mit elektrischer Energie zu übertragen.

Die elektrische Energiequelle kann beispielsweise als Gleichspannungsquelle ausgebildet sein. Zusätzlich können beispielsweise der erste und zweite Leistungskontakt 210, 211 mit jeweils einem Pol der Gleichspannungsenergiequelle verbunden sein. Der dritte und vierte Leistungskontakt 212, 213 können mit jeweils einem weiteren Pol einer weiteren Gleichspannungsenergiequelle oder einer Wechselspannungsenergiequelle verbunden sein, wobei die beiden Gleichspannungsenergiequellen beispielsweise eine unterschiedliche Spannung aufweisen können. Dadurch kann über die erste Anschlussseite 40 elektrische Leistung zweier elektrischer (unterschiedlicher) Energiequellen getrennt voneinander übertragen werden.

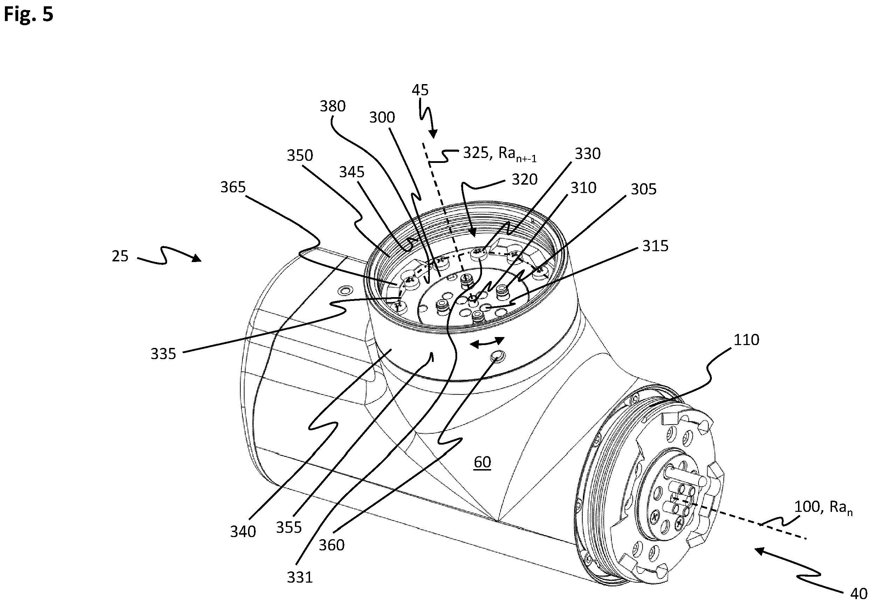

Figur 5 zeigt eine perspektivische Darstellung des in Figur 3 aktiven Armmoduls 25.

Die zweite Anschlussseite 45 ist drehfest mechanisch mit dem ersten Gehäuse 60 verbunden. Die zweite Anschlussseite 45 weist eine zweite Anschlussplatte 300, eine zweite Fluidkontakteinrichtung 305, eine zweite Kontakteinrichtung 310, eine zweite Leistungskontakteinrichtung 315 und eine zweite Kontaktseite 320 auf.

Die zweite Anschlussplatte 300 ist beispielhaft parallel zu der ersten Montageachse 100 und der Rotationsachse Raₙ ausgerichtet. Die zweite Anschlussplatte 300 weist im Wesentlichen in der Draufsicht eine kreisförmige Ausgestaltung auf. Dabei ist eine zweite Montageachse 325 geneigt, vorzugsweise senkrecht zu der ersten Montageachse 100 ausgerichtet. Die zweite Kontaktseite 320 und die zweite Anschlussplatte 300 sind senkrecht zu der zweiten Montageachse 325 ausgerichtet. An der zweiten Anschlussplatte 300 sind die zweite Fluidkontakteinrichtung 305, die zweite Kontakteinrichtung 310 und die zweite Leistungskontakteinrichtung 315 befestigt. Die zweite Fluidkontakteinrichtung 305, die zweite Kontakteinrichtung 310 und die zweite Leistungskontakteinrichtung 315 erstrecken sich längs bzw. parallel zu der zweiten Montageachse 325.

Die zweite Anschlussplatte 300 ist mittels eines dritten Befestigungsmittels 330, vorzugsweise mehreren in Umfangsrichtung bezogen auf die zweite Montageachse 325 versetzt zueinander angeordneten dritten Befestigungsmitteln 330, die beispielsweise als dritte Schrauben ausgebildet sein können, mit dem ersten Gehäuse 60 drehfest mechanisch verbunden. Die dritten Befestigungsmittel 330 sind auf der vierten Kreisbahn 335 umlaufend um die zweite Montageachse 325 beispielhaft in regelmäßigem Abstand angeordnet. Die dritte Schraube kann einen dritten Schraubenkopf 331 aufweisen, wobei der dritte Schraubenkopf 331 über eine zweite Stirnseite 380 der zweiten Kontaktseite 320 hervorragt und auf der zweiten Stirnseite 380 aufliegt. Der dritte Schraubenkopf 331 weist einen kleineren maximalen Außendurchmesser auf aus die erste Einbuchtung (in Figur 3 gezeigt) der ersten Anschlussseite 40.

Umfangsseitig wird die zweite Anschlussplatte 300 durch einen Befestigungsring 340 des aktiven Armmoduls 25 umgriffen. Der Befestigungsring 340 weist an einer zweiten inneren Umfangsseite 345 ein Innengewinde 350 auf, wobei das Innengewinde 350 korrespondierend oder zumindest komplementär zu dem Außengewinde 110 der ersten Anschlussseite 40 ausgebildet ist. Der Befestigungsring 340 ist axial fest gegenüber dem ersten Gehäuse 60 angeordnet. Der Befestigungsring 340 ist jedoch um die zweite Montageachse 325 gegenüber dem ersten Gehäuse 60 verdrehbar.

Bei Montage beispielsweise des zweiten aktiven Armmoduls 25.2 an dem ersten aktiven Armmodul 25.1 (vgl. Figur 1) wird die erste Anschlussseite 40.2 des zweiten aktiven Armmoduls 25.2 auf die zweite Anschlussseite 45.1 des ersten aktiven Armmoduls 40.1 aufgesetzt und durch Verdrehung des Befestigungsrings 340 das Innengewinde 350 auf das Außengewinde 110 aufgeschraubt. Dadurch wird die erste Kontaktseite 101 an die zweite Kontaktseite 320 angepresst.

Vorzugsweise weist der Befestigungsring 340 wenigstens einen der folgenden vierten Werkstoffe auf: Metall, Aluminium, Stahl, Titan, Aluminiumlegierung, hochfeste Aluminiumlegierung, AW7075, faserverstärkter Kunststoff, Glasfaserverstärkter Kunststoff (GfK), Kohlenstofffaserverstärkter Kunststoff (CfK).

Besonders von Vorteil ist, wenn, insbesondere bei einer im Wesentlichen identischen Ausgestaltung des ersten Werkstoffs und des vierten Werkstoffs, an einer zweiten äußeren Umfangsseite 355, die in der Ausführungsform im Wesentlichen zylinderförmig ausgebildet ist, eine Werkzeugaufnahme 360 angeordnet ist, wobei die Werkzeugaufnahme 360 beispielhaft als Sackloch ausgebildet ist. Dadurch kann zur Demontage bzw. zum Verdrehen des Befestigungsrings 340 gegenüber dem Außengewinde 110 bzw. dem ersten Gehäuse 60 mittels eines Werkzeugs (in Figur 5 nicht dargestellt), welches in die Werkzeugaufnahme 360 eingreift, ein (erhöhtes) Drehmoment in dem Befestigungsring 340 eingeleitet werden, um den Befestigungsring 340 von dem Außengewinde 110 zu lösen.

Umfangsseitig umgreift der Befestigungsring 340 die zweite Anschlussplatte 300. Dabei weist innenseitig angrenzend an den Befestigungsring 340 die zweite Anschlussplatte 300 eine zweite Stirnverzahnung 365 auf. Die zweite Stirnverzahnung 365 ist vorzugsweise als Hirth-Verzahnung ausgebildet. Die zweite Stirnverzahnung 365 kann komplementär oder vorzugsweise korrespondierend zur ersten Stirnverzahnung 116 ausgebildet sein. Die zweite Stirnverzahnung 365 ist in radialer Richtung zwischen der vierten Kreisbahn 335 und/oder dem dritten Befestigungsmittel 300 und dem Befestigungsring 340 angeordnet. Das dritte Befestigungsmittel 300 verbindet die zweite Anschlussseite 45 mit dem ersten Gehäuse

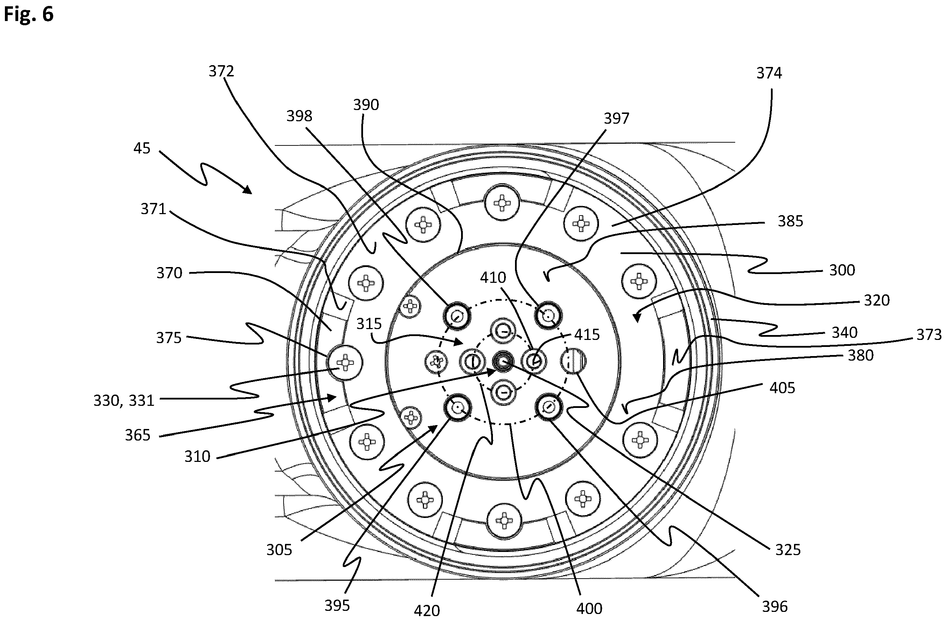

Figur 6 zeigt eine Draufsicht auf die zweite Anschlussseite 45 des in Figur 2 gezeigten aktiven Armmoduls 25.

Die erste Stirnverzahnung 116 und die zweite Stirnverzahnung 365 sind korrespondierend zueinander ausgebildet. Die zweite Stirnverzahnung 365 weist mehrere in Umfangsrichtung versetzt zueinander angeordnete zweite Zähne 370 auf, die auf einem gemeinsamen Teilkreis um die zweite Montageachse 325 angeordnet sind. Zur kompakten Ausgestaltung der zweiten Anschlussseite 45 kann in jeweils einem zweiten Zahn 370 der zweiten Stirnverzahnung 365 eine zweite Einbuchtung 375 angeordnet sein, wobei in der zweiten Einbuchtung 375 jeweils ein drittes Befestigungsmittel 330 angeordnet ist. Die zweite Einbuchtung 375 ist radial nach innen hin offen ausgebildet. Die zweite Einbuchtung 375 ist korrespondierend zu dem zweiten Schraubenkopf 331 ausgebildet und nimmt den zweiten Schraubenkopf 331 auf.

Jeder der zweiten Zähne 370 weist jeweils eine zweite Zahnflanke 371 auf. Zwischen den zweiten Zähnen 370 weist die zweite Stirnverzahnung 365 einen zweiten Zahngrund 372 auf, der sich in einer Ebene senkrecht zur zweiten Montageachse 325 erstreckt. Der zweite Zahngrund 372 und die dritte Stirnseite 380 sind in einer gemeinsamen Ebene angeordnet und stufenlos zueinander ausgebildet. Jeder der zweiten Zähne 370 weist einen zweiten Zahnkopf 373 auf, der plan ausgebildet ist und sich in einer Ebene senkrecht zu der zweiten Montageachse 325 erstreckt. In Umfangsrichtung bezogen auf die zweite Montageachse 325 ist jeweils zwischen in Umfangsrichtung bezogen auf die zweite Montageachse nächstliegend angeordnete zweiten Zähnen 370 jeweils ein zweite Zahnzwischenraum 374 angeordnet.

Die zweite Kontaktseite 320 ist im Wesentlichen korrespondierend zur ersten Kontaktseite ausgebildet. Dabei weist die zweite Kontaktseite 320 die dritte Stirnseite 380 und eine vierte Stirnseite 385 auf, wobei die dritte Stirnseite 380 radial innenseitig angrenzend an den Befestigungsring 340 angeordnet ist. Die dritte Stirnseite 380 weist in der Draufsicht eine etwa ringförmige Ausgestaltung auf, wobei an der dritten Stirnseite 380 die zweite Stirnverzahnung 365 und die dritten Befestigungsmittel 330 angeordnet sind.

Zur Aufnahme des ersten Anschlusselements 150 weist die zweite Anschlussplatte 300 eine Anschlussaufnahme 390 auf. Die Anschlussaufnahme 390 ist korrespondierend zu dem ersten Anschlusselement 150 ausgebildet und wird an ihrem Grund durch die vierte Stirnseite 385 begrenzt.

An der vierten Stirnseite 385 ist die zweite Fluidkontakteinrichtung 305 angeordnet. Die zweite Fluidkontakteinrichtung 305 ist korrespondierend zu der ersten Fluidkontakteinrichtung (vgl. Figuren 3 und 4) ausgebildet. Dabei kann die zweite Fluidkontakteinrichtung 305 einen fünften Fluidkontakt 395 aufweisen. Vorzugsweise weist die zweite Fluidkontakteinrichtung 305 neben dem fünften Fluidkontakt 395 noch einen sechsten bis achten Fluidkontakt 396 bis 398 auf, sodass die zweite Fluidkontakteinrichtung 305 und die erste Fluidkontakteinrichtung 180 die gleiche Anzahl von Fluidkontakten 395 bis 398 aufweist.

In der Ausführungsform sind der fünfte bis achte Fluidkontakt 395 bis 398 beispielhaft um 90° in Umfangsrichtung versetzt bezogen auf die zweite Montageachse 325 auf einer fünften Kreisbahn 400 um die zweite Montageachse 325 angeordnet. Zwischen dem sechsten Fluidkontakt 396 und dem in Umfangsrichtung nächstliegend zum sechsten Fluidkontakt 396 angeordneten siebten Fluidkontakt 397 ist beispielhaft mittig eine zweite Stiftaufnahme 405 in der zweiten Anschlussplatte 300 angeordnet. Die zweite Stiftaufnahme 405 kann beispielsweise als Sackloch oder als Bohrung in der zweiten Anschlussplatte 300 ausgebildet sein. Die zweite Stiftaufnahme 405 ist korrespondierend zu dem Stift 175 (vgl. Figuren 3 und 4) ausgebildet. Die Stiftaufnahme 405 ist radial nach außen hin versetzt zu der fünften Kreisbahn 400 angeordnet, überdeckt sich jedoch teilweise mit der fünften Kreisbahn 400.

Die zweite Kontakteinrichtung 310 ist auf der zweiten Montageachse 325 angeordnet und erstreckt sich längs der zweiten Montageachse 325.

Radial zwischen der zweiten Kontakteinrichtung 310 und der zweiten Fluidkontakteinrichtung 305 ist die zweite Leistungskontakteinrichtung 315 angeordnet. Die zweite Leistungskontakteinrichtung 315 ist korrespondierend zur ersten Leistungskontakteinrichtung 205 ausgebildet und ist in der Ausführungsform steckerförmig bzw. als männliche Ausgestaltung ausgebildet.

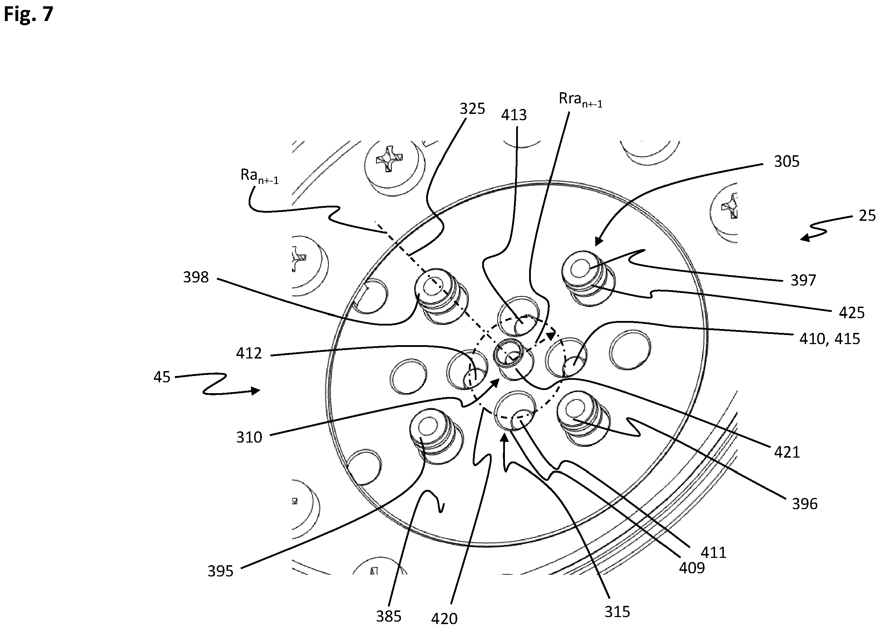

Figur 7 zeigt eine perspektivische Darstellung der in Figur 6 gezeigten zweiten Anschlussseite 45 des aktiven Armmoduls 25.

Die zweite Kontakteinrichtung 310 ist als Stecker/Männchen und korrespondierend zur ersten Kontakteinrichtung 220 ausgebildet. Die zweite Kontakteinrichtung 310 weist ein zweites Kontaktelement 421 auf, wobei das zweite Kontaktelement 421 zentral auf der zweiten Montageachse 325 angeordnet ist und hülsenförmig ausgebildet ist. Zusätzlich kann in dem zweiten Kontaktelement 421 wenigstens eine in Figur 7 nichtdargestellte Linse oder eine Linsenanordnung der zweiten Kontakteinrichtung 310 angeordnet sein. Das zweite Kontaktelement 421 ragt dabei über die vierte Stirnseite 385 heraus.

Dabei weist die zweite Leistungskontakteinrichtung 315 einen korrespondierend zum ersten Leistungskontakt ausgebildeten fünften Leistungskontakt 410 auf, wobei der fünfte Leistungskontakt 410 stiftförmig ausgebildet ist. Umfangsseitig und/oder stirnseitig weist der fünfte Leistungskontakt 410 eine dritte Kontaktfläche 415 auf. Der fünfte Leistungskontakt 410 ist ein einer zweiten Leistungskontaktaufnahme 409 angeordnet und gegenüber der vierten Stirnseite 385 zurückversetzt. Der fünfte Leistungskontakt 410 kann gefedert in der zweiten Kontaktaufnahme 409 befestigt sein.

Die zweite Leistungskontakteinrichtung 315 weist neben dem fünften Leistungskontakt 410 auch noch beispielhaft einen sechsten, siebten und achten Leistungskontakt 411, 412, 413, auf, die ebenso als stiftförmig beispielhaft ausgebildet sind und in der Ausführungsform identisch zum fünften Leistungskontakt 410 ausgebildet sind. Auch der sechste bis achte Leistungskontakt 411 bis 413 sind in jeweils einer zweiten Leistungskontaktaufnahme 409 zurückversetzt angeordnet. Die zurückversetzte Anordnung des fünften bis achten Leistungskontakts 410, 411, 412, 413 schützt den fünften bis achten Leistungskontakt 410, 411, 412, 413 vor Berührung.

In Radialrichtung Rara_{n±1} bezogen auf die zweite Montageachse 325 zwischen der zweiten Fluidkontakteinrichtung 305 und der zweiten Kontakteinrichtung 310 sind der fünfte bis achte Leistungskontakt 410, 411, 412, 413 auf der sechsten Kreisbahn 420 um die zweite Montageachse 325 konzentrisch angeordnet.

Der fünfte bis achte Fluidkontakt 395 bis 398 sind in der Ausführungsform beispielhaft identisch zueinander ausgebildet. Dabei ist der fünfte Fluidkontakt 395 beispielhaft rohrförmig ausgebildet. Der fünfte Fluidkontakt 395 erstreckt sich parallel zur zweiten Montageachse 325. Dabei ist mit einem festen Ende der fünfte Fluidkontakt 395 mit der vierten Stirnseite 385 verbunden. Der fünfte Fluidkontakt 395 ist beispielhaft als Männchen ausgebildet. Dabei mündet der zweite Fluidkontakt 395 beabstandet auf einer zur vierten Stirnseite 385 abgewandten Seite. Umfangsseitig weist jeweils der fünfte Fluidkontakt 395 ein erstes Dichtelement 425 auf, vorzugsweise einen O-Ring, der in einer Nut beispielsweise des fünften Fluidkontakts 395 umfangsseitig angeordnet sein kann.

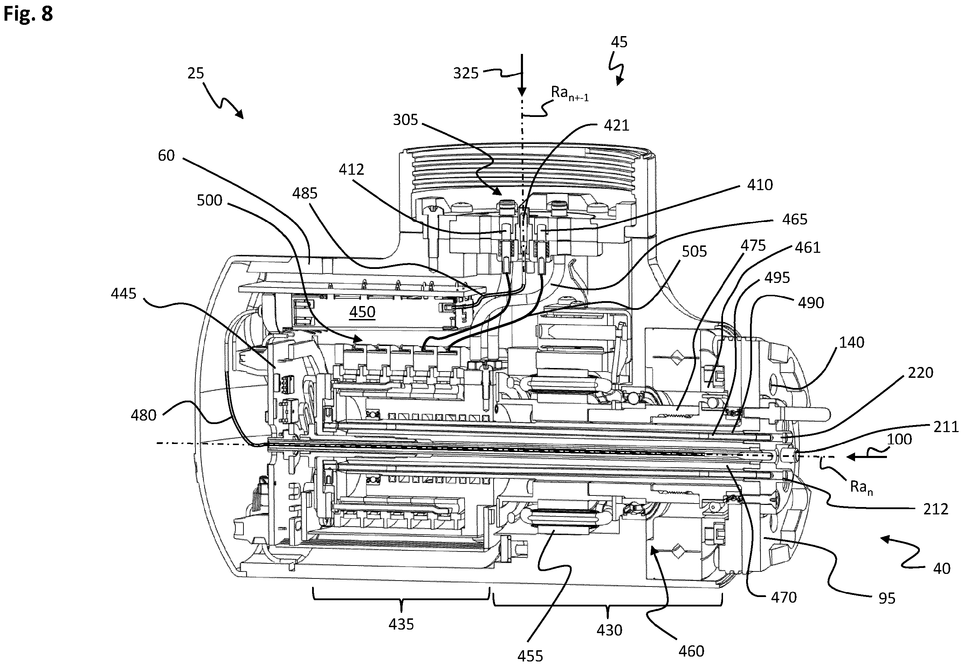

Figur 8 zeigt einen perspektivischen Halblängsschnitt durch das in Figur 2 gezeigte aktive Armmodul 25.

Das aktive Armmodul 25 weist in dem ersten Gehäuse 60 eine Antriebseinrichtung 430, eine Übergabeeinrichtung 435, ein Steuergerät 445 und wenigstens einen Umsetzer 450 auf.

Die Antriebseinrichtung 430 weist eine elektrische Maschine 455 und ein Getriebe 460 auf, wobei das Getriebe 460 eingangsseitig mit der elektrischen Maschine 455 verbunden ist. Ausgangseitig weist das Getriebe 460 einen Abtriebsflansch 491 auf. Der Abtriebsflansch 461 ist mittels des ersten Befestigungsmittels 140 mit der Anschlussplatte 95 drehfest verbunden. Dabei ist beispielsweise eine Schraube des ersten Befestigungsmittels 140 in den Abtriebsflansch 461 eingeschraubt. Im Betrieb der elektrischen Maschine 455 treibt die elektrische Maschine 455 mit einer Motordrehzahl das Getriebe 460 an. Das Getriebe 460 untersetzt, vorzugsweise mit einem Untersetzungsverhältnis von 1:30 bis 1:200, die Motordrehzahl auf eine Abtriebsdrehzahl. Die Abtriebsdrehzahl liegt an dem Abtriebsflansch 461 an. Der Abtriebsflansch 461 des Getriebes 460 treibt die erste Anschlussseite 40 über das erste Befestigungsmittel 140 und hierbei insbesondere die erste Anschlussplatte 95 an. Dabei ist das Getriebe 460 axial zwischen der elektrischen Maschine 455 und der ersten Anschlussseite 40 bezogen auf die Rotationsachse Raₙ angeordnet, die mit der ersten Montageachse 100 überlappt. Durch die drehfeste Verbindung mit der ersten Anschlussplatte 95 ist die erste Hohlwelle 470 mit dem Abtriebsflansch 461 drehfest gekoppelt und rotiert mit der Abtriebsdrehzahl. Axial auf einer der ersten Anschlussseite 40 abgewandten Seite der Antriebseinrichtung 430 ist die Übergabeeinrichtung 435 angeordnet. Die Übergabeeinrichtung 435 ist vorzugsweise in der Ausführungsform beispielhaft mit mehreren Schlauchleitungen 465 fluidisch ausgangsseitig mit der zweiten Fluidkontakteinrichtung 305 verbunden. In axialer Richtung bezogen auf die Rotationsachse Raₙ ist das Steuergerät 445 am gegenüberliegenden Ende des ersten Gehäuses 60 zu der ersten Anschlussseite 40 angeordnet.

In Figur 8 oberseitig der Übergabeeinrichtung 435, also auf einer der zweiten Anschlussseite 45 zugewandten Seite, ist der Umsetzer 450 angeordnet.

Die erste Anschlussseite 40 weist ferner eine erste Hohlwelle 470 auf. Die Antriebseinrichtung 430 weist ferner eine zweite Hohlwelle 475 auf, wobei die zweite Hohlwelle 475 die elektrische Maschine 455 mit dem Getriebe 460 verbindet. Die zweite Hohlwelle 475 läuft somit mit der Motordrehzahl und die erste Hohlwelle 470 mit der Abtriebsdrehzahl.

Die zweite Hohlwelle 475 ist in axialer Richtung kürzer ausgebildet als die erste Hohlwelle 470. Die erste Hohlwelle 470 erstreckt sich dabei im Wesentlichen in Längsrichtung über die gesamte Antriebseinrichtung 430 und die Übergabeeinrichtung 435. Dabei durchgreift die erste Hohlwelle 470 die zweite Hohlwelle 475 sowie die Antriebseinrichtung 430 und die Übergabeeinrichtung 435.

Zentral ist in der ersten Hohlwelle 470 ein erster Lichtwellenleiter 480 angeordnet, wobei der erste Lichtwellenleiter 480 an einem (Axial-) Ende mit der ersten Kontakteinrichtung 220 verbunden ist. An einem anderen Ende ist der erste Lichtwellenleiter 480mit dem Umsetzer 450 optisch verbunden. Im Betrieb der elektrischen Maschine 455 ist der erste Lichtwellenleiter 480 auf der Rotationsachse Raₙ verlaufend angeordnet und drehfest zu den Hohlwellen 470, 475. Die erste Kontakteinrichtung 220 ist dabei als Drehübertrager ausgebildet und koppelt das (rotierbare) erste Kontaktelement 225 mit dem drehfest angeordneten ersten Lichtwellenleiter 480.

Wird in erste Kontakteinrichtung 220 ein optisches Signal eingeleitet, so wird das optische Signal von der ersten Kontakteinrichtung 220 über den ersten Lichtwellenleiter 480 an den Umsetzer 450 übertragen. Auf Grundlage des erfassten optischen Signals setzt der Umsetzer 450 das optische Signal in ein elektrisches Datensignal um. Der Umsetzer 450 ist ausgangsseitig mittels eines zweiten Lichtwellenleiters 485 mit dem zweiten Kontaktelement 421 optisch verbunden. Das von dem Umsetzer 450 erfasste elektrische Datensignal setzt der Umsetzer 450 wieder in ein (weiteres) optisches Signal um und das weitere optische Signal wird über den zweiten Lichtwellenleiter 485 an das zweite Kontaktelement 421 übertragen.

Radial außenseitig zu dem ersten Lichtwellenleiter 480 ist fluchtend zu dem ersten bis vierten Leistungskontakt 210 bis 213 jeweils eine zugeordnete Bohrung 490 in der ersten Hohlwelle 470 und der ersten Anschlussplatte 95 angeordnet, die sich in Axialrichtung im Wesentlichen über die gesamte Länge der ersten Hohlwelle 470 erstreckt.

In der Bohrung 490 ist zum einen jeweils der erste bis vierte Leistungskontakt 210 bis 213 angeordnet, wobei jedoch ein Isolierelement in der Bohrung 490 vorgesehen sein kann, um in der ersten Anschlussplatte 95 einen elektrischen Kontakt zwischen dem ersten bis vierten Leistungskontakt 210 bis 213 und der elektrisch leitenden Anschlussplatte 95 zu verhindern.

In jeweils einer Bohrung 490 ist jeweils eine erste elektrische Verbindung 495 elektrisch isoliert gegenüber der ersten Hohlwelle 470 verlaufend angeordnet. Die erste elektrische Verbindung 495 ist an einem Ende elektrisch mit dem jeweils einem zugeordneten ersten bis vierten Leistungskontakt 210 bis 213 verbunden.

Die Übergabeeinrichtung 435 weist für jeden ersten bis vierten Leistungskontakt eine Schleifringeinheit 500 auf, wobei jeweils eine erste elektrische Verbindung 495 am anderen Ende mit jeweils einer Schleifringeinheit 500 elektrisch verbunden ist. Zusätzlich ist eine weitere Schleifringeinheit 500 für einen Massekontakt zwischen dem ersten Gehäuse 60 und der ersten Hohlwelle 470 bzw. über die erste Hohlwelle 470 mit der ersten Anschlussplatte 95 vorgesehen.

Jede Schleifringeinheit 500 ist jeweils mittels einer zweiten elektrischen Verbindung 505 mit jeweils einem der zugeordneten fünften bis achten Leistungskontakte 410 bis 413 verbunden. Somit ist beispielsweise der erste Leistungskontakt 210 über die erste und zweite elektrische Verbindung 495, 505 und die Schleifringeinheit 500 mit dem fünften Leistungskontakt 410 elektrisch verbunden.

Das Steuergerät 445 ist elektrisch über eine in Figur 8 nicht dargestellte dritte elektrische Verbindung über die Schleifringeinheit 500 mit wenigstens zwei, vorzugsweise vier der ersten bis achten Leistungskontakte 210 bis 413 elektrisch verbunden.

Durch die erste und zweite elektrische Verbindung 495, 505 des ersten Leistungskontakts 210 mit dem fünften Leistungskontakt 410 liegt somit am fünften Leistungskontakt 410 der erste Pol und am sechsten Leistungskontakt 411 der zweite Pol an. Der dritte und vierte Leistungskontakt 212, 213 sowie der siebte und achte Leistungskontakt 412, 413 können individuell zur elektrischen Leistungsübertragung von der weiteren elektrischen (Gleich- oder Wechselspannungs-) Energiequelle genutzt werden, sodass beispielsweise am siebten und achten Leistungskontakt 412, 413 ein anderes Spannungsniveau anliegt als an dem fünften und sechsten Leistungskontakt 410, 411.

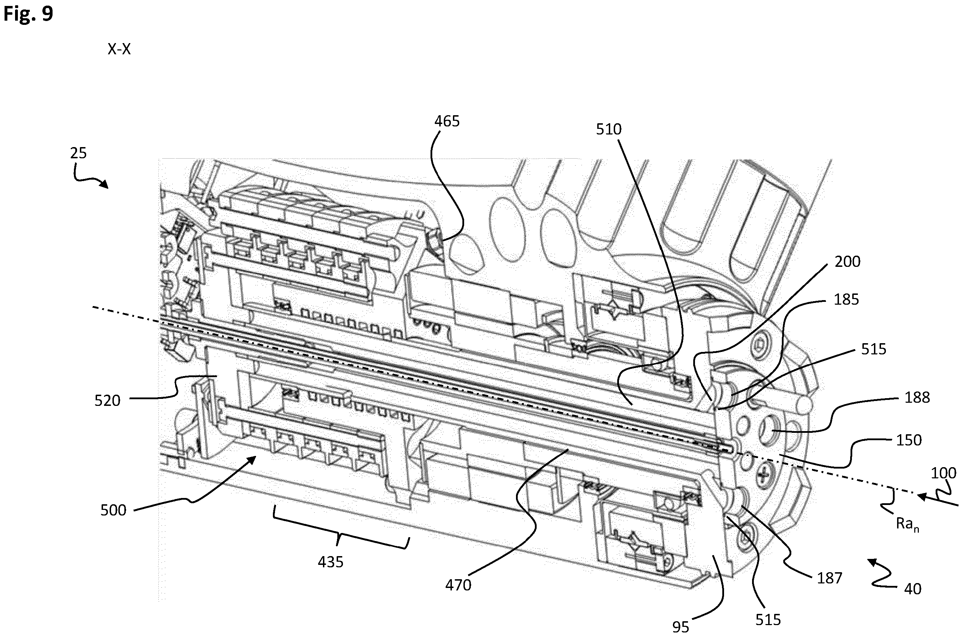

Figur 9 zeigt eine perspektivische Schnittansicht entlang einer in Figur 3 gezeigten Schnittebene X-X durch ein aktives Armmodul 25.

Die erste Anschlussplatte 95 und die erste Hohlwelle 470 sind in der Ausführungsform einstückig und materialeinheitlich ausgebildet. Dabei weist die erste Hohlwelle 470 einen geringeren Außendurchmesser auf als die erste Anschlussplatte 95.

In der ersten Anschlussplatte 95 ist der erste Fluidverbindungskanal 200 angeordnet. Der erste Fluidverbindungskanal 200 mündet an der ersten Anschlussseite 40 an dem ersten Fluidkontakt 185. Auf einer zur ersten Anschlussseite 40 abgewandten Seite mündet der erste Fluidverbindungskanal 200 in einem Fluidkanal 510. Der Fluidkanal 510 ist sowohl in der ersten Hohlwelle 470 in Axialrichtung verlaufend angeordnet als auch in der ersten Anschlussplatte 95. Der erste Fluidverbindungskanal 200 verläuft dabei schräg zu dem Fluidkanal 510 radial von außen nach innen hin. Der Fluidkanal 510 kann als Bohrung ausgebildet sein. Der Fluidkanal 510 ist radial innenseitig zu dem ersten Fluidkontakt 185 angeordnet.

Zur fluidischen Abdichtung des Fluidverbindungskanals 200 und des Fluidkanals 510 ist ein zweites Dichtelement 515 an der ersten Anschlussseite 40 vorgesehen. Das zweite Dichtelement 515 ist axial zwischen dem ersten Anschlusselement 150 und der ersten Anschlussplatte 95 angeordnet. Das zweite Dichtelement 515 kann als O-Ring ausgebildet sein. Dabei ist für jeden ersten bis vierten Fluidkontakt 185, 186, 187, 188 ein zweites Dichtelement 515 vorgesehen, das konzentrisch zu dem jeweiligen ersten bis vierten Fluidkontakt 185, 186, 187, 188 angeordnet ist.

Auf dem zur ersten Anschlussseite 40 abgewandten Axialende der ersten Hohlwelle 470 weist die Schleifringeinheit 500 ein Abschlusselement 520 auf, das rückseitig den Fluidkanal 510 verschließt, sodass stirnseitig auf dem zur ersten Anschlussseite 40 abgewandten Axialende der als Bohrung ausgebildete Fluidkanal 510 fluiddicht auf einfache Weise verschlossen ist. Das Abschlusselement 520 kann Teil der Schleifringeinheit 500 sein.

In der Ausführungsform ist für jeden der ersten bis vierten Fluidkontakte 185, 186, 187, 188 jeweils ein Fluidverbindungskanal 200 und ein Fluidkanal 510 vorgesehen, wobei der Fluidverbindungskanal 200 und der Fluidkanal 510 fluidisch getrennt zu den anderen Fluidverbindungskanälen und Fluidkanälen 510 angeordnet sind. Dadurch wird die fluidische Trennung der ersten bis vierten Fluidkontakte 185 bis 188 auch in der ersten Hohlwelle 470 und der ersten Anschlussplatte 95 aufrechterhalten.

Die Übergabeeinrichtung 435 ist als Drehübertrager ausgebildet und koppelt fluidisch die erste Hohlwelle 470 mit einer drehfest im ersten Gehäuseinnenraum angeordneten Schlauchleitung 465. Über die Übergabeeinrichtung 435 ist der Fluidkanal 510 jeweils mit einer Schlauchleitung 465 mit jeweils einem zugeordneten fünften bis achten Fluidkontakt der zweiten Fluidkontakteinrichtung fluidisch verbunden. Somit ist jeweils ein (erster bis vierter) Fluidkontakt 185, 187 mit jeweils einem zugeordneten und korrespondierend angeordneten (fünften bis achten) Fluidkontakt an der zweiten Anschlussseite fluidisch verbunden. Die fluidische Verbindung wird auch bei Rotation der ersten Anschlussseite 40 um die Rotationsachse Raₙ aufrechterhalten. Die Rotation um die Rotationsachse Raₙ ist durch die oben beschriebene Ausgestaltung nicht limitiert und kann nahezu unbegrenzt sein.

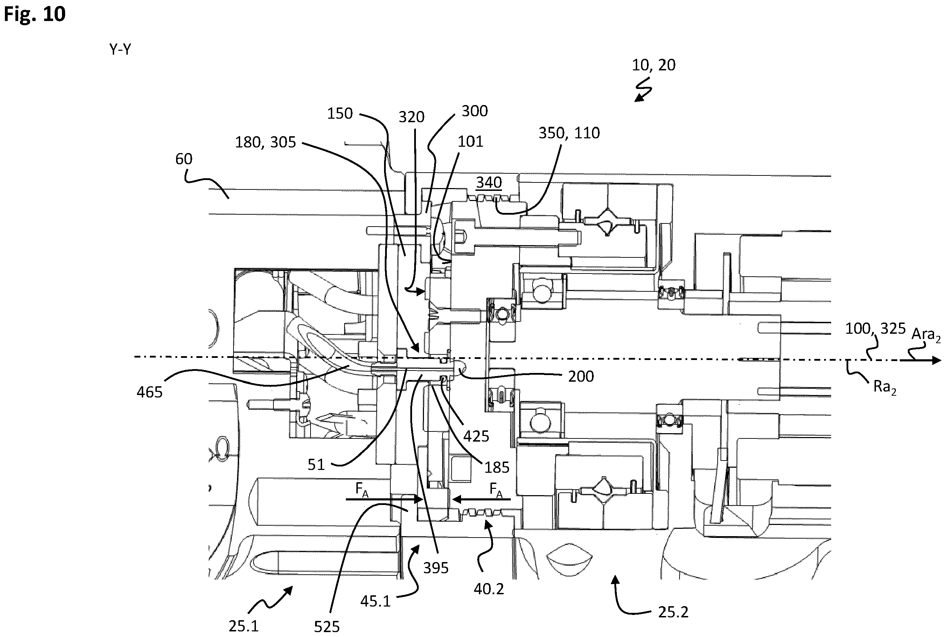

Figur 10 zeigt eine Schnittansicht entlang einer in Figur 1 gezeigten Schnittebene Y-Y durch das erste aktive Armmodul 25.1 und das zweite aktive Armmodul 25.2 des in Figur 1 Roboterarms 20 des Industrieroboters 10.

Die Verbindung zwischen den verschiedenen in Figur 1 gezeigten aktiven und passiven Armmodulen 25, 30 erfolgt analog zu der im Folgenden erläuterten Verbindung zwischen der zweiten Anschlussseite 45.1 des ersten aktiven Armmoduls 25.1 und der ersten Anschlussseite 40.2 des zweiten aktiven Armmoduls 25.2. Zur mechanischen Befestigung in Axialrichtung Ara₂ ist der Befestigungsring 340 mit dem Innengewinde 350 auf das Außengewinde 110 aufgeschraubt, sodass die erste Kontaktseite 101 und die zweite Kontaktseite 320 axial aneinandergepresst sind und die ersten und zweiten Kontaktseiten 101, 320 zumindest bereichsweise flächig aneinander anliegen.

Zur Montage werden entlang der ersten und zweiten Montageachsen 100, 325 die erste Anschlussseite 40.2 des zweiten aktiven Armmoduls 25.2 und die zweite Anschlussseite 45.1 des ersten aktiven Armmoduls 25.1 aufeinander zu bewegt, bis die Kontaktseiten aneinander anliegen. Zur axialen Befestigung des Befestigungsrings 340 weist dieser einen Kragen 525 auf, der sich radial nach innen erstreckt und zwischen die zweite Anschlussplatte 300 und dem Gehäuse 60 eingreift. Dadurch ist der der Befestigungsring 340 in Umfangsrichtung verdrehbar um die zweite Montageachse 325, die mit einer zweiten Rotationsachse Ra₂ überlappt, angeordnet. Zur mechanischen Befestigung wird der Befestigungsring 340 auf das Außengewinde 110 aufgeschraubt und mit einem vordefinierten Anzugsdrehmoment um die erste und zweite Montageachse 100, 325 angezogen. Rückseitig stützt sich der Befestigungsring 340 am Kragen 525 ab. Durch das vordefinierte Anzugsdrehmoment werden die erste Anschlussseite 40 und die zweite Anschlussseite 45 mit einem aus dem Anzugsdrehmoment resultierenden Axialkraft F_{A} gegeneinander gepresst.

Im montierten Zustand greifen ferner die erste und zweite Fluidkontakteinrichtung 180, 305 ineinander und stellen eine fluiddichte Verbindung zwischen der ersten Anschlussseite 40.2 des zweiten aktiven Armmoduls 25.2 und der zweiten Anschlussseite 45.1 des ersten Armmoduls 25.1 bereit. Dabei greift beispielsweise der fünfte Fluidkontakt 395 in den ersten Fluidkontakt 185 ein. Umfangsseitig dichtet das in der Nut angeordnete erste Dichtelement 425 den fünften Fluidkontakt 395 gegenüber dem ersten Fluidkontakt 185 ab. Der zweite Fluidkontakt 395 mündet axial gegenüberliegend zum ersten Fluidverbindungskanal 200.

Im Betrieb des Industrieroboters 10 kann beispielsweise über die Roboterbasis 15 (vgl. Figur 1) das Fluid 51, vorzugsweise Druckluft oder Kühlflüssigkeit beispielsweise zum Kühlen eines Spanvorgangs oder Hydraulikflüssigkeit, bereitgestellt werden, das über die Roboterbasis 15 zunächst in das dritte passive Armmodul 30.3 und dann in das erste aktive Armmodul 25.1 eingeleitet wird. Das Fluid 51 wird über das erste aktive Armmodul 25.1 von der ersten Anschlussseite an die zweite Anschlussseite 45.1 des ersten aktiven Armmoduls 25.1 übertragen und weitergeleitet. Die Weiterleitung erfolgt dabei über die erste Anschlussseite 40.1 des ersten aktiven Armmoduls 25.1 (im Folgenden wird auf Figuren 1, 9 und 10 gemeinsam Bezug genommen),über den Fluidverbindungskanal 200 und Fluidkanal 510, die Übergabeeinrichtung 435 und die Schlauchleitung 465 an die zweite Fluidkontakteinrichtung 305. Durch die in Kontakt befindlichen ersten und zweiten Fluidkontakteinrichtungen 180, 305 ist an der ersten Anschlussseite 40.2 des zweiten aktiven Armmoduls 25.2 das zweite aktive Armmodul 25.2 fluidisch mit der zweiten Anschlussseite 45.1 des ersten aktiven Armmoduls 25.1 verbunden. Die Übertragung des Fluids 51 erfolgt über das zweite aktive Armmodul 25.2 ebenso wie eben beschrieben im ersten aktiven Armmodul 25.1 zur zweiten Anschlussseite 45.2 des zweiten aktiven Armmoduls 25.2. Dadurch kann von der Roboterbasis 15 hin in Richtung des Endeffektors das Fluid 51 übertragen werden.

Je nach Bereitstellung des Fluids 51 und Verschaltung der Roboterbasis 15 können die einzelnen ersten und zweiten Fluidkontakte 185, 395 parallel mit dem gleichen Fluid 51 durchströmt werden oder können die einzelnen ersten und zweiten Fluidkontakte 185, 395 fluidisch voneinander getrennt sein und/oder in unterschiedliche Richtungen mit Fluid 51 durchströmt werden. Auch können unterschiedliche Fluide 51 über die fluidisch voneinander getrennten Fluidkanäle und Fluidverbindungskanäle geführt werden.

So kann beispielsweise bei dem in Figur 1 gezeigten Industrieroboter 10, je nach Verschaltung einer Fluidführung in der Roboterbasis 15 und der Ausgestaltung des Endeffektors, der Endeffektor über bis zu vier getrennt schaltbar fluidische Verbindungen versorgt werden. Dadurch kann der Endeffektor beispielsweise auch von der Roboterbasis 15 aus mittels Magnetventilen gesteuert werden.

Auch können zwei oder mehrere Fluidverbindungskanäle und Fluidkanäle parallelgeschaltet sein, sodass beispielsweise ein besonders hoher Massestrom von Fluid 51 über die ersten und zweiten Fluidkontakteinrichtungen 180, 305 von der Roboterbasis 15 zu dem Endeffektor übertragen werden kann.

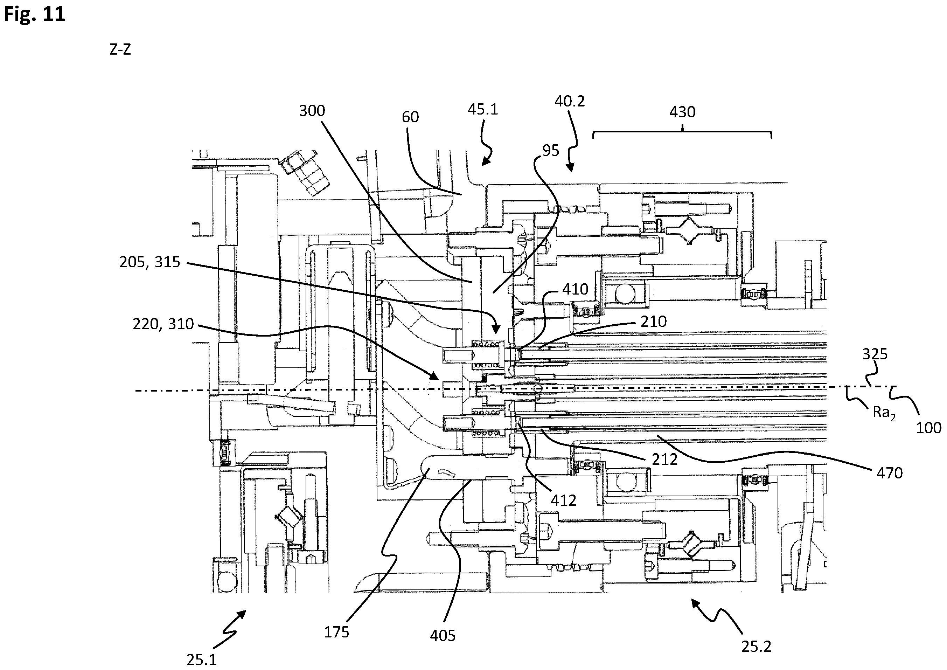

Figur 11 zeigt eine Schnittansicht entlang einer in Figur 1 gezeigten Schnittebene Z-Z durch das in den Figuren 1 gezeigte erste und zweite aktive Armmodul 25.1, 25.2.

In montiertem Zustand der zweiten Anschlussseite 45.1 des ersten Armmoduls 25.1 an der ersten Anschlussseite 40.2 des zweiten aktiven Armmoduls 25.2 greift der Stift 175 in die ihm zugeordnete zweite Stiftaufnahme 405 ein. In der Ausführungsform sind die zweite Anschlussplatte 300, die erste Anschlussplatte 95 und der Stift 175 aus einem elektrisch leitfähigen Material ausgebildet. Ferner ist die zweite Anschlussseite 45.1 des ersten aktiven Armmoduls 25.1 elektrisch mit einem Massekontakt beispielsweise über die Roboterbasis 15 verbunden. Der Stift 175 kontaktiert die zweite Stiftaufnahme 405 elektrisch und stellt somit nicht nur eine Orientierung der ersten Anschlussseite 40.2 des zweiten aktiven Armmoduls 25.2 zu der zweiten Anschlussseite 45.1 des ersten aktiven Armmoduls 25.1 um die zweite Rotationsachse Ra₂, die mit der ersten und zweiten Montageachse 100, 325 überlappt, bereit, sondern stellt auch einen Massekontakt über die elektrisch leitfähig ausgebildete erste Hohlwelle 470, die Übergabeeinrichtung 435 und dem ersten Gehäuse 60 zu der zweiten Anschlussseite 45.2 des zweiten aktiven Armmoduls 25.2 sicher.

Ebenso kontaktiert die erste Kontakteinrichtung 220 die zweite Kontakteinrichtung 310, sodass von der Roboterbasis 15 über das dritte passive Armmodul 30.3, das erste aktive Armmodul 25.1 und dann über die zweite Anschlussseite 45.1 des ersten aktiven Armmoduls 25.1 und die erste Anschlussseite 40.2 des zweiten aktiven Armmoduls 25.2 hinweg das optische Signal an das zweite Armmodul 25.2 übertragen werden kann. Das optische Signal wird weiter im aktiven Armmodul 25, beispielsweise dem zweiten aktiven Armmodul 25.2 wie in Figur 8 erläutert, zu der zweiten Anschlussseite 45.2 des zweiten aktiven Armmoduls 25.2 hinweg übertragen.

Ebenso kontaktiert die erste Leistungskontakteinrichtung 205 die zweite Leistungskontakteinrichtung 315. Dabei liegt stirnseitig der fünfte bis achte Leistungskontakt 410 bis 413 an dem jeweils zugeordneten ersten bis vierten Leistungskontakt 210 bis 213 an. Rückseitig kann der fünfte bis achte Leistungskontakt 410 bis 413 federnd in der zweiten Anschlussseite 45.1 des ersten aktiven Armmoduls 25.1 gelagert sein und mittels einer Vorspannkraft an den jeweils zugeordneten zweiten bis vierten Leistungskontakt 210 bis 213 gepresst werden. Die elektrische Leistung kann dabei zum Betrieb der Antriebseinrichtung 430 des ersten aktiven Armmoduls 25.1 und zum Betrieb des Steuergeräts 445 genutzt werden.

Ferner kann die elektrische Leistung zumindest teilweise über die zweite Anschlussseite 45.1 des ersten aktiven Armmoduls 25.1 und die erste Anschlussseite 40.2 des zweiten aktiven Armmoduls 25.2 an das zweite aktive Armmodul 25.2 übertragen werden. Das zweite aktive Armmodul 25.2 stellt durch die elektrische Verbindung zwischen der ersten und zweiten Leistungskontakteinrichtung 205, 315 und dem zweiten aktiven Armmodul 25.2 die elektrische Leistung auch an der zweiten Anschlussseite 45.2 des zweiten aktiven Armmoduls 25.2 hin bereit.

Dadurch kann über die aktiven Armmodule 25 und die passiven Armmodule 30 hinweg von der Roboterbasis 15 aus in Richtung des Endeffektors die elektrische Leistung über die Anschlussseiten übertragen werden. Dabei kann jeweils zusätzlich das aktive Armmodul 25 mit der elektrischen Leistung zum Betrieb des Steuergeräts 445, des Umsetzers 450 und der Antriebseinrichtung 430 versorgt werden und elektrische Leistung auch zum Betrieb des Endeffektors weitergeleitet werden oder elektrische Leistung zum Betrieb von Zusatzaggregaten oder Peripheriegeräten des Roboterarms 20 übertragen werden.

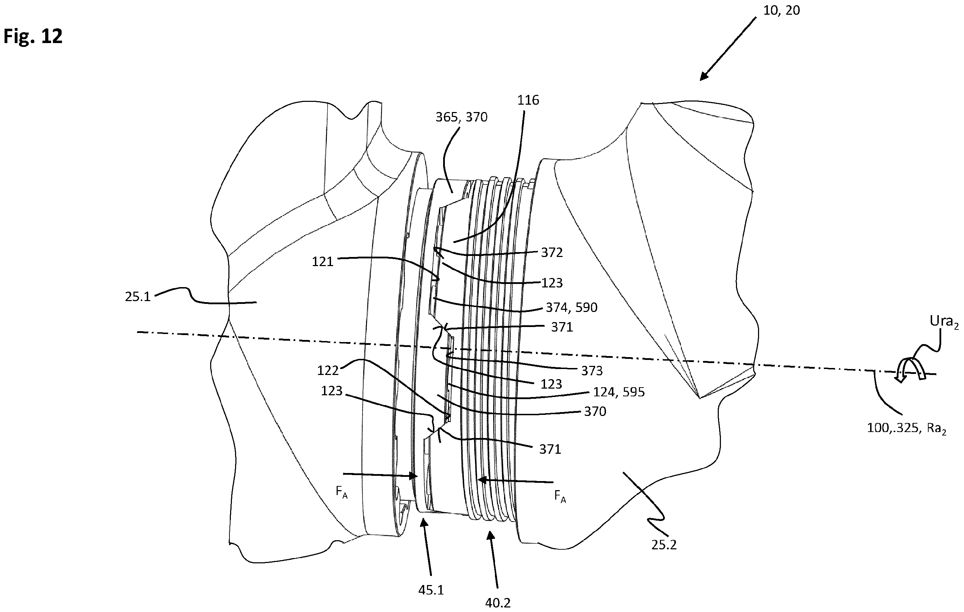

Figur 12 zeigt einen in Figur 1 markierten Ausschnitt V des in Figur 1 gezeigten Industrieroboters 10.

Um beim Betrieb bzw. bei Aktivierung der Antriebseinrichtung 430 (in Figur 12 verdeckt) das zweite aktive Armmodul 25.2 relativ um die zweite Rotationsachse Ra₂ gegenüber dem ersten aktiven Armmodul 25.1 zu verdrehen und ein Drehmoment zwischen dem ersten aktiven Armmodul 25.1 und dem zweiten aktiven Armmodul 25.2 auszutauschen, greift die erste Stirnverzahnung 116 und die zweite Stirnverzahnung 365 ineinander ein. Die erste Stirnverzahnung 116 und die zweite Stirnverzahnung 365 sind dabei zumindest komplementär, vorzugsweise korrespondierend zueinander ausgebildet. Vorzugsweise sind die erste und zweite Stirnverzahnung 116, 365 als Hirth-Verzahnung ausgebildet, sodass bei Montage der ersten Anschlussseite 40.2 des zweiten aktiven Armmoduls 25.2 an der zweiten Anschlussseite 45.1 des ersten aktiven Armmoduls 25.1 die beiden genannten Anschlussseiten 40.2, 45.1 gegenüber einander relativ in radialer Richtung zu der ersten und zweiten Montageachse 100, 325, die dann in montiertem Zustand der zweiten Rotationsachse Ra₂ entsprechen, zentrieren. Eine Vorzentrierung kann durch den Eingriff des Stifts 175 in die Stiftaufnahme 405 erfolgen (in Figur 10 dargestellt).

Während des Zentrierens gleiten die erste Zahnflanke 123 und die zweite Zahnflanke 371 aneinander und orientieren die erste Anschlussseite 40.2 und die zweite Anschlussseite 45.1 sowohl in Umfangsrichtung Ura₂ als auch in radialer Richtung bezogen auf die erste und zweite Montageachse 100, 325. In montiertem Zustand des Roboterarms 20 liegen jeweils zwei in Umfangsrichtung gegenüberliegend angeordnete erste und zweite Zahnflanke 123, 371 aneinander an.

Ferner greift in montiertem Zustand des Roboterarms 20 der erste Zahn 123 in den zweiten Zahnzwischenraum 372 zwischen in Umfangsrichtung nächstliegenden zwei zweiten Zähnen 370 ein. Die erste Stirnverzahnung 116 und die zweite Stirnverzahnung 365 sind beispielhaft flankenzentriert, sodass zwischen dem ersten Zahnkopf 221 und dem zweiten Zahngrund 372 ein erster Axialspalt 590 angeordnet ist.

Ebenso greift der zweite Zahn 370 in den ersten Zahnzwischenraum 124 ein. Der zweite Zahnkopf 373 ist durch einen zweiten Axialspalt 595 in axialer Richtung beabstandet zu dem ersten Zahngrund 122 angeordnet. Die Übertragung der der resultierenden Axialkraft F_{A} zwischen der ersten Stirnverzahnung 116 und der zweiten Stirnverzahnung 365 erfolgt somit ausschließlich über die ersten und zweiten Zahnflanken 123, 371. Auch das zwischen der ersten Anschlussseite 40.2 und der zweiten Anschlussseite 45.1 zu übertragende Drehmoment wird im Wesentlichen ausschließlich über die über die ersten und zweiten Zahnflanken 123, 371 übertragen. Dadurch wird eine mechanische Belastung der Kontakteinrichtung, der Leistungskontakteinrichtung und der Fluidkontakteinrichtung in Umfangsrichtung vermieden.

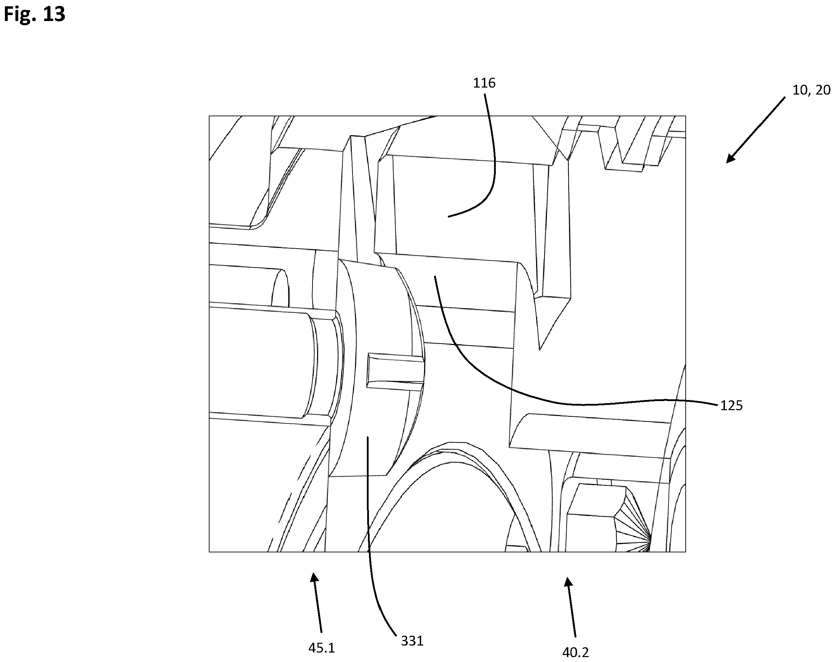

Figur 13 zeigt einen Ausschnitt einer Schnittansicht entlang einer in Figur 1 gezeigten Schnittebene W-W durch den in Figur 1 gezeigten Industrieroboter 10.

In Figur 13 ist die Schnittfläche nicht geschlossen dargestellt. Die erste Einbuchtung 125 ist zumindest abschnittweise korrespondierend zu dem zweiten Schraubenkopf 331 des dritten Befestigungsmittels 330 ausgebildet. In die erste Einbuchtung 125 greift der zweite Schraubenkopf 331 ein, wobei der zweite Schraubenkopf 331 in axialer Richtung beabstandet zum Einbuchtungsgrund der ersten Einbuchtung 125 angeordnet ist. Dadurch wird eine Überbestimmung an der ersten und zweiten Anschlussseite 40, 45 vermieden.

Im Folgenden werden die Figuren 11 bis 13 gemeinsam beschrieben. Durch die Zentrierung in Umfangsrichtung und radialer Richtung wird ein zuverlässiges Einschieben der ersten und zweiten Kontakteinrichtung 220, 310 sowie der ersten und zweiten Fluidkontakteinrichtung 180, 305 und der ersten und zweiten Leistungskontakteinrichtung 205, 315 sichergestellt. Die Orientierung in Umfangsrichtung und Kodierung in Umfangsrichtung erfolgt dabei durch den Eingriff des Stifts 175 in die zweite Stiftaufnahme 405.

Wird die Antriebseinrichtung 430 beispielsweise des zweiten aktiven Armmoduls 25.2 aktiviert, so wird die erste Anschlussseite 40.2 des zweiten aktiven Armmoduls 25.2 relativ gegenüber dem ersten Gehäuse 60 des zweiten aktiven Armmoduls 25.2 und gegenüber der zweiten Anschlussseite 45.1 des ersten aktiven Armmoduls 25.1 verdreht. Je nach Ansteuerung der einzelnen ersten bis sechsten aktiven Armmodule 25.1 bis 25.6 des in Figur 1 gezeigten Industrieroboters 10 kann der Industrieroboter 10 entsprechend um alle sechs ersten bis sechsten Rotationsachsen Ra₁ bis Ra₂ gesteuert werden. Dabei kann sowohl die elektrische Leistung, das Fluid 51 als auch das optische Signal zur Datenkommunikation, das beispielsweise gemäß dem EtherCAT-Standard übertragen wird, von der Roboterbasis 15 hin zum Endeffektor innenseitig des Roboterarms 20 ohne Limitierung einer Rotation um die Rotationsachse Raₙ übertragen werden.

Der in den Figuren 1 bis 13 gezeigte Industrieroboter 10, insbesondere die aktiven Armmodule 25 haben den Vorteil, dass sie standardisiert und/oder einheitlich und/oder identisch ausgebildet sind und mittels der einzelnen aktiven und/oder passiven Armmodule 25,30 und der jeweils korrespondierend zueinander ausgebildeten ersten und zweiten Anschlussseite 40, 45 in Abhängigkeit der benötigten Rotationsachsen Raₙ einfach aneinander montiert werden können.

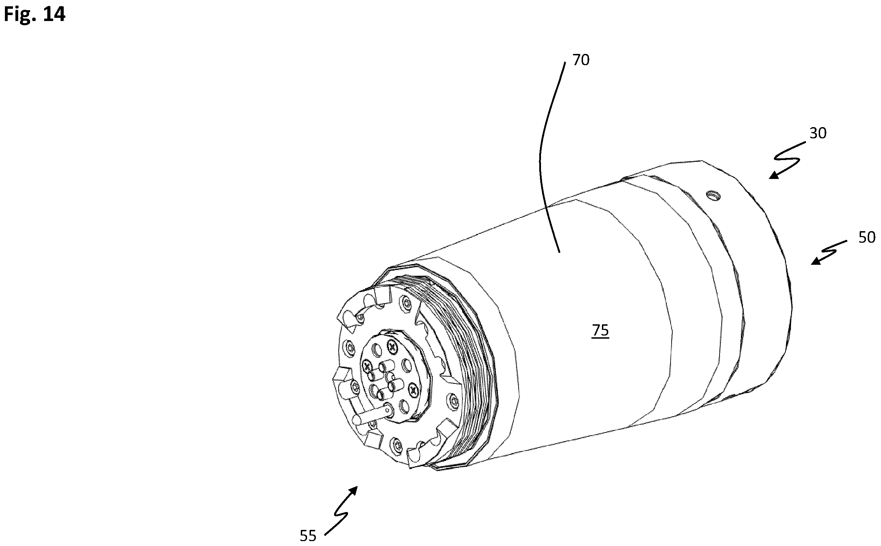

Figur 14 zeigt eine perspektivische Darstellung eines passiven Armmoduls 30 gemäß einer ersten Ausführungsform.

Wie zu Figur 1 erläutert, können zusätzlich zu den aktiven Armmodulen 25 auch passive Armmodule 30 vorgesehen sein. Das in Figur 14 gezeigte passive Armmodul 30 kann beispielsweise das in Figur 1 gezeigte zweite passive Armmodul 30.2 sein.

Das passive Armmodul 30 ist im Wesentlichen identisch zu dem aktiven Armmodul 25 ausgebildet. Die dritte Anschlussseite 50 ist innerhalb des zweiten Gehäuseinnenraums 75 des jeweiligen passiven Armmodul 30 fluidisch, datentechnisch, vorzugsweise optisch, und leistungselektrisch mit der vierten Anschlussseite 55 verbunden.

Abweichend davon sind jedoch sowohl die dritte Anschlussseite 50 als auch die vierte Anschlussseite 55 drehfest mit dem zweiten Gehäuse 70 verbunden. In der Ausführungsform ist die vierte Anschlussseite 55 analog zu der ersten Anschlussseite des aktiven Armmoduls ausgebildet, sodass bezüglich der detaillierten Beschreibung auf die Figuren 3 und 4 verwiesen wird. Die dritte Anschlussseite 50 ist analog zu der zweiten Anschlussseite des aktiven Armmoduls ausgebildet, sodass hierbei auf die detaillierte Beschreibung zu den Figuren 5 bis 7 verwiesen wird.

Ferner wird bei dem passiven Armmodul 30 auch auf die erste und zweite Übergabeeinrichtung, den Umsetzer, das Steuergerät sowie die Antriebseinrichtung verzichtet. Dadurch sind die erste Fluidkontakteinrichtung der dritten Anschlussseite 50 direkt mittels einer Fluidverbindung mit der zweiten Fluidkontakteinrichtung der vierten Anschlussseite 55 fluidisch, die erste Kontakteinrichtung mit der zweiten Kontakteinrichtung vorzugsweise direkt mittels eines weiteren Lichtwellenleiters optisch und die erste Leistungskontakteinrichtung direkt, beispielsweise mittels elektrischer Kabel, mit der zweiten Kontakteinrichtung leistungselektrisch verbunden.

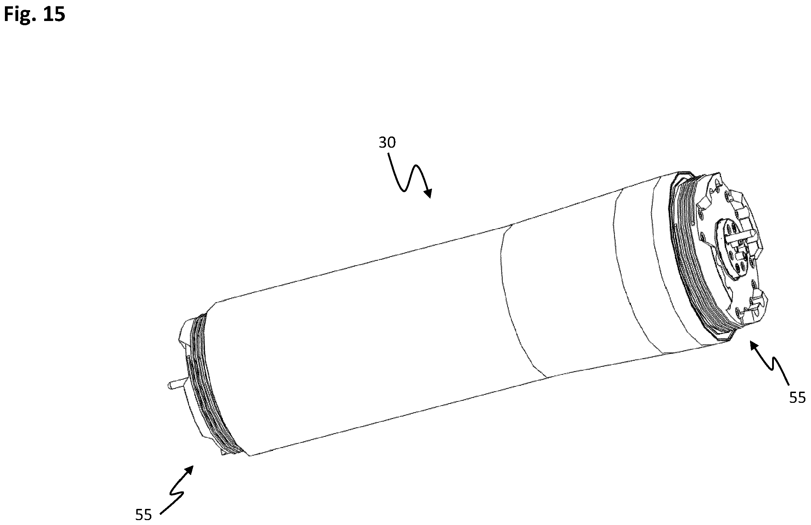

Figur 15 zeigt eine perspektivische Darstellung eines passiven Armmoduls 30 gemäß einer zweiten Ausführungsform.

Das in Figur 15 gezeigte passive Armmodul 30 ist im Wesentlichen identisch zu dem in Figur 14 gezeigten passiven Armmodul 30 ausgebildet. Im Unterschied dazu weist das hier dargestellte passive Armmodul 30 zwei vierte Anschlussseiten 55 auf, die jeweils analog zu der ersten Anschlussseite des aktiven Armmoduls ausgebildet sind. Das in Figur 15 gezeigte Armmodul 30 kann beispielsweise als erstes Armmodul 30.1 des in Figur 1 gezeigten Roboterarms 15 eingesetzt sein.

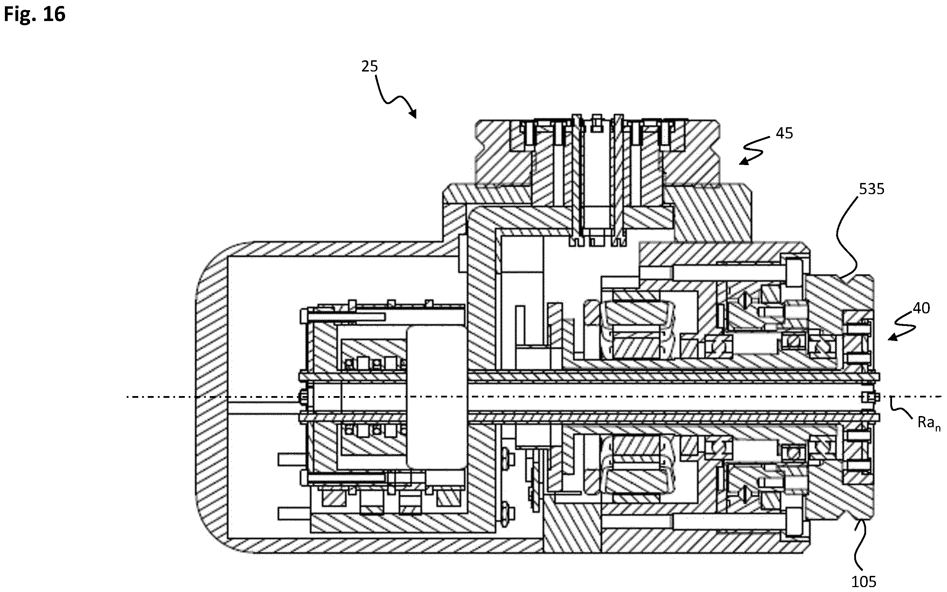

Figur 16 zeigt eine geschnittene Darstellung auf ein aktives Armmodul 25 gemäß einer zweiten Ausführungsform.

Das aktive Armmodul 25 ist im Wesentlichen identisch zu dem in den Figuren 1 bis 13 gezeigten aktiven Armmodul 25 des in Figur 1 gezeigten Industrieroboters 10 ausgebildet. Im Folgenden wird nur auf die Unterschiede des in Figur 16 gezeigten aktiven Armmoduls 25 gegenüber der in den Figuren 1 bis 13 gezeigten Ausgestaltung des aktiven Armmoduls 25 eingegangen. Die erste Anschlussseite 40 und die zweite Anschlussseite 45 sind identisch zueinander ausgebildet. Dabei ist beispielhaft bei der in Figur 16 gezeigten Ausgestaltung des aktiven Armmoduls 25 die zweite Anschlussseite 45 im Wesentlichen wie die in den Figuren 1 bis 13 erläutere erste Anschlussseite 40 ausgebildet. Somit sind beide Anschlussseiten 40, 45 beispielhaft als Weibchen ausgebildet. Ferner wird auf die erste und zweite Stirnverzahnung an den beiden Anschlussseiten 40, 45 verzichtet. Ebenso wird auf den Befestigungsring an der zweiten Anschlussseite 45 verzichtet.

Abweichend zu den Figuren 1 bis 13 ist an der ersten äußeren Umfangsseite 105 anstatt des Außengewindes die erste äußere Umfangsseite 105 im Wesentlichen zylinderförmig ausgebildet, wobei vorzugsweise eine beispielhaft V-förmig ausgebildete Nut 535 in der ersten äußeren Umfangsseite 105 angeordnet ist. Die Nut 535 ist umlaufend um die jeweilige Rotationsachse Raₙ angeordnet. Um mehrere aktive Armmodule 25 miteinander zu verbinden, weist der Roboterarm zwischen jeweils zwei zu verbindenden aktiven Armmodulen 25 zusätzlich einen Verbinder auf.

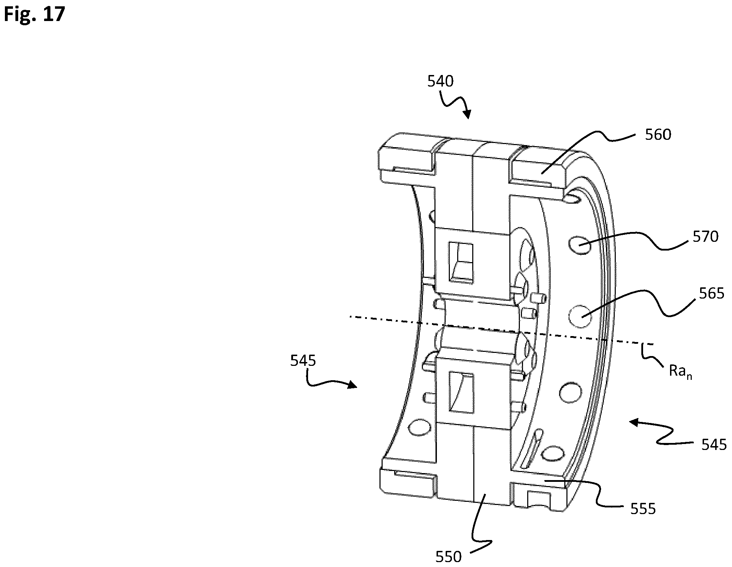

Figur 17 zeigt einen Längsschnitt durch den Verbinder 540.

Der Verbinder 540 weist jeweils beidseitig eine Verbinderanschlussseite 545 auf, wobei die Verbinderanschlussseiten 545 identisch zueinander ausgebildet sind. Der Verbinder 540 bildet dabei eine Art passives Armmodul aus, das in Axialrichtung besonders kurz ausgebildet ist. Die Verbinderanschlussseite 545 ist beispielhaft als Männchen zumindest komplementär, vorzugsweise korrespondierend zu der ersten Anschlussseite 40 bzw. der zweiten Anschlussseite 45 des in Figur 16 gezeigten aktiven Armmoduls ausgebildet.

Um zwei in Figur 16 gezeigte aktive Armmodule 25 mechanisch miteinander zu verbinden, weist jede Verbinderanschlussseite 545 jeweils außenseitig einen an einem Verbindergehäuse 550 angeordneten Steg 555 auf, der zylinderförmig ausgebildet ist. Radial außenseitig an dem Steg 555 ist ein um die Rotationsachse Raₙ verdrehbarer Spannring 560 angeordnet. In dem Steg 555 sind in regelmäßigen Abständen erste Kugelaufnahmen 565 vorgesehen, wobei in jeder Kugelaufnahme 565 jeweils eine Kugel 570 angeordnet ist.

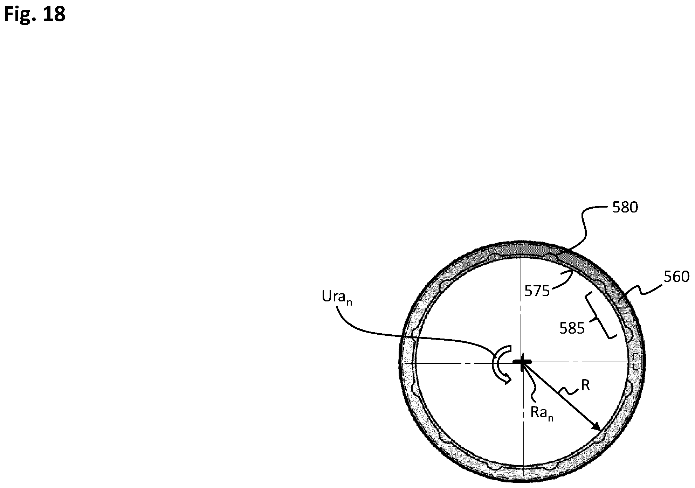

Figur 18 zeigt einen Querschnitt durch den in Figur 17 gezeigten Spannring 560 des Verbinders.

An einer dritten inneren Umfangsseite 575 weist der Spannring 560 jeweils in regelmäßigen Abständen eine zweite Kugelaufnahme 580 auf, die nach außen hin verschlossen ist. Daran schließt sich in Umfangsrichtung Uraₙ bezogen auf die Rotationsachse Raₙ jeweils ein Konusabschnitt 585 an, wobei der Konusabschnitt 585 sich in Umfangsrichtung in seinem Radius R bezogen auf die Rotationsachse Raₙ verjüngt.

Im Folgenden werden die Figuren 16 bis 18 gemeinsam erläutert. Zur Montage wird der Verbinder 540 mit einer Verbinderanschlussseite 545 auf eine der beiden Anschlussseiten 40, 45 des in Figur 16 gezeigten aktiven Armmoduls 25 aufgeschoben. Dabei wird die erste oder zweite Anschlussseite 40, 45 sowohl datentechnisch, leistungstechnisch als auch fluidisch mit dem Verbinder 540 verbunden. Zur mechanischen Befestigung greifen die Kugeln 570 in die Nut 535 ein. Hat der Verbinder 540 eine Endposition dadurch erreicht, dass die erste oder zweite Kontaktseite an einem Grund der Verbinderanschlussseite 545 anliegt, so wird der Spannring 560 in Umfangsrichtung Uraₙ verdreht. Durch den Konusabschnitt 585 werden die Kugeln 570 radial nach innen in die Nut 535 gepresst. Dadurch wird ein Reibschluss zwischen dem Verbinder 540 und der Anschlussseite 40, 45 erzeugt. An der anderen Verbinderanschlussseite 545 wird dann die andere Anschlussseite 40, 45 des nächsten aktiven Armmoduls 25 eingeschoben und die Verbindung des weiteren aktiven Armmoduls 25 mit dem Verbinder 540 erfolgt wie eben erläutert analog. Dadurch können zwei aktive Armmodule 25 miteinander verbunden werden.

Alternativ kann anstatt des in Figur 16 gezeigten aktiven Armmoduls 25 auch das passive Armmodul wie in Figur 16 an der dritten und vierten Anschlussseite ausgebildet sein. Dabei sind an einem passiven Armmodul zwei identisch zueinander ausgebildete dritte und vierte Anschlussseiten vorgesehen, die identisch zur ersten Anschlussseite ausgebildet sind und ebenso mit dem Verbinder 540 mit einer entsprechenden Anschlussseiten 40, 45 des aktiven Armmoduls 25 verbunden werden können.

Ebenso kann über den Verbinder 540 ein Drehmoment übertragen werden, sodass mittels der (aktiven) ersten Anschlussseite 40 der Verbinder 540, aber auch das am Verbinder 540 befestigte weitere nächste aktive oder passive Armmodul 25,30 verdreht werden kann. Diese Ausgestaltung hat den Vorteil, dass die Armmodule 18 besonders schnell aneinander montiert werden können.

### Bezugszeichenliste

- 10: Industrieroboter
- 15: Roboterbasis
- 20: Roboterarm
- 25: aktives Armmodul

- 25.1: erstes aktives Armmodul
- 25.2: zweites aktives Armmodul
- 25.3: drittes aktives Armmodul
- 25.4: viertes aktives Armmodul
- 25.5: fünftes aktives Armmodul
- 25.6: sechstes aktives Armmodul

- 30: passives Armmodul

- 30.1: erstes passives Armmodul
- 30.2: zweites passives Armmodul
- 30.3: drittes passives Armmodul

- 35: Endeffektoranschlussseite
- 40: erste Anschlussseite

- 40.1: erste Anschlussseite des ersten aktiven Armmoduls
- 40.2: erste Anschlussseite des zweiten aktiven Armmoduls
- 40.3: erste Anschlussseite des dritten aktiven Armmoduls
- 40.4: erste Anschlussseite des vierten aktiven Armmoduls
- 40.5: erste Anschlussseite des fünften aktiven Armmoduls
- 40.6: erste Anschlussseite des sechsten aktiven Armmoduls

- 45: zweite Anschlussseite

- 45.1: zweite Anschlussseite des ersten aktiven Armmoduls
- 45.2: zweite Anschlussseite des zweiten aktiven Armmoduls
- 45.3: zweite Anschlussseite des dritten aktiven Armmoduls
- 45.4: zweite Anschlussseite des vierten aktiven Armmoduls
- 45.5: zweite Anschlussseite des fünften aktiven Armmoduls
- 45.6: zweite Anschlussseite des sechsten aktiven Armmoduls

- 50: dritte Anschlussseite

- 50.2: dritte Anschlussseite des zweiten passiven Armmoduls
- 50.3: dritte Anschlussseite des dritten passiven Armmoduls

- 55: vierte Anschlussseite
- 55.1: vierte Anschlussseite des ersten passiven Armmoduls
- 55.2: vierte Anschlussseite des zweiten passiven Armmoduls
- 55.3: vierte Anschlussseite des dritten passiven Armmoduls

- 60: erstes Gehäuse
- 65: erster Gehäuseinnenraum
- 70: zweites Gehäuse
- 75: zweiter Gehäuseinnenraum
- 80: erster Gehäuseabschnitt
- 85: zweiter Gehäuseabschnitt
- 90: Seitenfläche
- 95: erste Anschlussplatte
- 100: erste Montageachse
- 101: erste Kontaktseite
- 105: erste äußere Umfangsseite
- 110: Außengewinde
- 115: erste Stirnseite
- 116: erste Stirnverzahnung
- 120: erster Zahn
- 121: erster Zahnkopf
- 122: erster Zahngrund
- 123: erste Zahnflanke
- 124: erster Zahnzwischenraum
- 125: erste Einbuchtung
- 130: erste innere Zahnumfangsseite
- 140: erstes Befestigungsmittel
- 145: erste Kreisbahn
- 150: erstes Anschlusselement
- 155: zweite Stirnseite
- 160: zweites Befestigungsmittel
- 165: zweite Kreisbahn
- 170: erste Stiftaufnahme
- 175: Stift
- 180: erste Fluidkontakteinrichtung
- 185: erster Fluidkontakt
- 190: Rohraufnahme
- 195: Dichtfläche
- 200: erster Fluidkanal
- 205: erste Leistungskontakteinrichtung
- 210: erster Leistungskontakt
- 211: zweiter Leistungskontakt
- 212: dritter Leistungskontakt
- 213: vierter Leistungskontakt
- 215: dritte Kreisbahn
- 220: erste Kontakteinrichtung
- 225: erstes Kontaktelement
- 230: Kontaktaufnahme
- 235: erste Leistungskontaktaufnahme
- 240: erste Kontaktfläche
- 245: zweite Kontaktfläche

- 300: zweite Anschlussplatte
- 305: zweite Fluidkontakteinrichtung
- 310: zweite Kontakteinrichtung
- 315: zweite Leistungskontakteinrichtung
- 320: zweite Kontaktseite
- 325: zweite Montageachse
- 330: drittes Befestigungsmittel
- 331: zweiter Schraubenkopf
- 335: vierte Kreisbahn
- 340: Befestigungsring
- 345: zweite innere Umfangsseite
- 350: Innengewinde
- 355: zweite äußere Umfangsseite (des Befestigungsrings)
- 360: Werkzeugaufnahme
- 365: zweite Stirnverzahnung
- 370: zweiter Zahn
- 371: zweite Zahnflanke
- 372: zweiter Zahngrund
- 373: zweiter Zahnkopf
- 374: zweiter Zahnzwischenraum
- 375: zweite Einbuchtung
- 380: dritte Stirnseite
- 385: vierte Stirnseite
- 390: Anschlussaufnahme
- 395: zweiter Fluidkontakt
- 396: Rohrabschnitt
- 400: fünfte Kreisbahn
- 405: zweite Stiftaufnahme
- 409: zweite Leistungskontaktaufnahme
- 410: fünfter Leistungskontakt
- 411: sechster Leistungskontakt
- 412: siebter Leistungskontakt
- 413: achter Leistungskontakt
- 415: dritte Kontaktfläche
- 420: sechste Kreisbahn
- 421: zweites Kontaktelement
- 425: erstes Dichtelement
- 430: Antriebseinrichtung
- 435: Übergabeeinrichtung
- 445: Steuergerät
- 450: Umsetzer
- 455: elektrische Maschine
- 460: Getriebe
- 461: Abtriebsflansch
- 465: Schlauchleitung
- 470: erste Hohlwelle
- 475: zweite Hohlwelle
- 480: erster Lichtwellenleiter
- 485: zweiter Lichtwellenleiter
- 490: Bohrung
- 495: erste elektrische Verbindung
- 500: Schleifringeinheit
- 505: zweite elektrische Verbindung
- 510: zweiter Fluidkanal
- 515: zweites Dichtelement
- 520: zweites Anschlusselement
- 525: Kragen
- 530: Fluid
- 535: Nut
- 540: Verbinder
- 545: Verbinderanschlussseite
- 550: Verbindergehäuse
- 555: Steg
- 560: Spannring
- 565: erste Kugelaufnahme
- 570: Kugel
- 575: dritte innere Umfangsseite
- 580: zweite Kugelaufnahme
- 585: Konusabschnitt
- 590: erster Axialspalt
- 595: zweiter Axialspalt

- F_{A}: Axial kraft

## Patentansprüche

1. Armmodul (18) für einen modularen Roboterarm (20) eines Industrieroboters (10),
- aufweisend ein erstes Gehäuse (60), eine erste Anschlussseite (40) und eine zweite Anschlussseite (45),
- wobei die erste Anschlussseite (40) eine erste Anschlussplatte (95) und eine erste Kontakteinrichtung (220) aufweist und die zweite Anschlussseite (45) mit dem ersten Gehäuse (60) mechanisch drehfest verbunden ist und eine zweite Anschlussplatte (300) aufweist,
- wobei an der ersten Anschlussplatte (95) die erste Kontakteinrichtung (220) angeordnet ist und sich parallel zu einer ersten Montageachse (100) erstreckt,
- wobei die erste Anschlussseite (40) mit einem weiteren Armmodul (18) des Roboterarms (20) verbindbar ist,
- wobei über die erste Kontakteinrichtung (220) ein optisches Signal und/oder ein elektrisches Signal zur Datenübertragung hinweg übertragbar ist,
- wobei die zweite Anschlussplatte (300) umfangsseitig durch einen Befestigungsring (340) umgriffen ist, und der Befestigungsring (340) an einer inneren Umfangsseite (345) ein Innengewinde (350) aufweist,
- wobei der Befestigungsring (340) um die zweite Montageachse (325) drehbar mit einem ersten Gehäuse (60) des Armmoduls (18) verbunden ist,
- wobei an der ersten Anschlussplatte (95) eine erste Stirnverzahnung (116) angeordnet ist,
- wobei die zweite Anschlussplatte (300) eine zweite Stirnverzahnung (365) aufweist,
- wobei die erste Stirnverzahnung (116) und die zweite Stirnverzahnung (365) komplementär und/oder korrespondierend zueinander ausgebildet sind,
- wobei an einer ersten äußeren Umfangsseite (105) der ersten Anschlussplatte (95) ein Außengewinde (110) umlaufend um die erste Montageachse (100) angeordnet ist,
- wobei das Innengewinde (35) korrespondierend zu dem Außengewinde (110) ausgebildet ist,
**dadurch gekennzeichnet, dass**
- die erste Anschlussseite (40) eine erste Fluidkontakteinrichtung (180) aufweist,
- wobei an der ersten Anschlussplatte (95) die erste Fluidkontakteinrichtung (180) angeordnet ist und sich parallel zu einer ersten Montageachse (100) erstreckt,
- wobei über die erste Fluidkontakteinrichtung (180) ein Fluid (51), insbesondere
- Druckluft oder eine Hydraulikflüssigkeit, hinweg übertragbar ist,
- wobei der Befestigungsring (340) axial fest mit einem ersten Gehäuse (60) des Armmoduls (18) verbunden ist,

2. Armmodul (18) nach Anspruch 1,
- wobei die erste Stirnverzahnung (116) und/oder die zweite Stirnverzahnung (365) als Hirthverzahnung ausgebildet ist,
und/oder
- wobei die zweite Stirnverzahnung (365) innenseitig anschließend zu dem Befestigungsring (340) angeordnet ist

3. Armmodule (18) nach einem der vorhergehenden Ansprüche,
- wobei die erste Anschlussplatte (95) und die erste Stirnverzahnung (116) einstückig und materialeinheitlich ausgebildet sind
und/oder
- wobei die zweite Anschlussplatte (300) und die zweite Stirnverzahnung (365) einstückig und materialeinheitlich ausgebildet sind.

4. Armmodul (18) nach einem der vorhergehenden Ansprüche,
- wobei in radialer Richtung (Raₙ, Rpₙ) sich innenseitig an die erste äußere Umfangsseite (105) die erste Stirnverzahnung (116) anschließt,
- wobei radial zwischen der ersten Leistungskontakteinrichtung (205) und der ersten Stirnverzahnung (116) die erste Fluidkontakteinrichtung (180) angeordnet ist.

5. Armmodul (18) nach einem der vorhergehenden Ansprüche,
- wobei die erste Stirnverzahnung (116) wenigstens einen ersten Zahn (120) aufweist,
- wobei der erste Zahn (120) eine erste Einbuchtung (125) aufweist, die sich in axialer Richtung entlang der ersten Montageachse (100) erstreckt,
- wobei die zweite Anschlusseite (45) mittels eines dritten Befestigungsmittels (330) mit dem ersten Gehäuse (60) drehfest verbunden ist,
- wobei das dritte Befestigungsmittel (330) über die zweite Anschlussplatte (300) ragt,
- wobei die erste Einbuchtung (125) zumindest abschnittsweise korrespondierend zu dem dritten Befestigungsmittel (330) ausgebildet ist und/oder
- wobei die erste Leistungskontakteinrichtung (205) in radialer Richtung (Raₙ, Rpₙ) bezogen auf die erste Montageachse (100) zwischen der ersten Kontakteinrichtung (220) und der ersten Fluidkontakteinrichtung (180) angeordnet ist,
- wobei radial außenseitig zu der ersten Leistungskontakteinrichtung (205) die erste Fluidkontakteinrichtung (180) zwischen der ersten Leistungskontakteinrichtung (205) und der ersten äußeren Umfangsseite (105) an der ersten Anschlussplatte (95) angeordnet ist,
- wobei über die erste Fluidkontakteinrichtung (180) ein Fluid (51), insbesondere Druckluft oder eine Hydraulikflüssigkeit, über die erste Kontakteinrichtung (220) ein optisches Signal und/oder ein elektrisches Signal zur Datenübertragung und über die erste Leistungskontakteinrichtung (205) hinweg eine elektrische Leistung zur Versorgung des Armmoduls (18) mit elektrischer Energie hinweg übertragbar ist.

6. Armmodul (18) nach einem der vorhergehenden Ansprüche,
- wobei die zweite Anschlussseite (45) eine korrespondiert zur ersten Fluidkontakteinrichtung (180) ausgebildete zweite Fluidkontakteinrichtung (305), eine korrespondierend zur ersten Leistungskontakteinrichtung (205) ausgebildete zweite Leistungskontakteinrichtung (315) und eine korrespondierend zur ersten Kontakteinrichtung (220) ausgebildete zweite Kontakteinrichtung (310) aufweist,
- wobei an der zweiten Anschlussplatte (300) die zweite Fluidkontakteinrichtung (305), die zweite Leistungskontakteinrichtung (315) und die zweite Kontakteinrichtung (310) angeordnet sind und sich die zweite Fluidkontakteinrichtung (305), die zweite Leistungskontakteinrichtung (315) und die zweite Kontakteinrichtung (310) längs einer zweiten Montageachse (325) erstrecken,
- wobei die erste Fluidkontakteinrichtung (180) mit der zweiten Fluidkontakteinrichtung (305) fluidisch direkt oder indirekt in dem ersten Gehäuse (60) und die erste Kontakteinrichtung (220) mit der zweiten Kontakteinrichtung (310) datentechnisch zur Übertragung des optischen und/oder elektrischen Signals direkt oder indirekt in dem ersten Gehäuse (60) verbunden sind,
- wobei die erste Leistungskontakteinrichtung (205) und die zweite Leistungskontakteinrichtung (315) elektrisch direkt oder in indirekt in dem ersten Gehäuse (60) miteinander verbunden sind,
- wobei die erste Leistungskontakteinrichtung (205) und die zweite Leistungskontakteinrichtung (315) elektrisch miteinander verbunden sind,
- wobei über die zweite Fluidkontakteinrichtung (305) das Fluid (51), über die zweite Leistungskontakteinrichtung (315) die elektrische Leistung und über die zweite Kontakteinrichtung (310) das optisches und/oder das elektrisches Signal hinweg übertragbar ist.

7. Armmodul (18) nach einem der vorhergehenden Ansprüche,
- wobei die erste Kontakteinrichtung (220) mehrere in Umfangsrichtung bezogen auf die erste Montageachse (100) angeordnete erste Kontaktelemente (225) aufweist,
- wobei die ersten Kontaktelemente (225) konzentrisch zu der der ersten Montageachse (100) angeordnet ist,
- wobei über das erste Kontaktelement (225) hinweg das elektrisches Datensignal übertragbar ist.

8. Armmodul (18) nach einem der vorhergehenden Ansprüche,
- wobei die erste Fluidkontakteinrichtung (180) mehrere in Umfangsrichtung (Uraₙ, Urp) bezogen auf die erste Montageachse (100) versetzt angeordnete erste Fluidkontakte (185) aufweist,
- wobei die ersten Fluidkontakte (185) konzentrisch zu der ersten Montageachse (100) angeordnet und identisch zueinander ausgebildet sind,
- wobei die ersten Fluidkontakte (185) fluidisch voneinander getrennt sind und/oder zumindest teilweise fluidisch parallelgeschaltet sind.

9. Armmodul (18) nach Anspruch 8,
- wobei die zweite Fluidkontakteinrichtung (305) wenigstens einen zweiten Fluidkontakt (395) aufweist,
- wobei sich der zweite Fluidkontakt (395) parallel zur zweiten Montageachse (325) erstreckt,
- wobei der erste Fluidkontakt (185) mit dem zweiten Fluidkontakt (395) zum Austauschs eines Fluids (530) miteinander verbunden sind,
- wobei der erste Fluidkontakt (185) eine Rohraufnahme (190) und der zweite Fluidkontakt (395) einen Rohrabschnitt (396) aufweisen,
- wobei die Rohraufnahme (190) und der Rohrabschnitt (396) zumindest umfangsseitig korrespondieren zueinander ausgebildet sind.

10. Armmodul (18) einem der vorhergehenden Ansprüche,
- aufweisend einen beabstandet und parallel zu der ersten Montageachse (100) verlaufenden Stift (175),
- wobei der Stift (175) mit der ersten Anschlussplatte (95) elektrisch und mechanisch verbunden ist und über die erste Anschlussplatte (95) ragt,
- wobei der Stift (175) ausgebildet ist, in eine Stiftaufnahme (405) des weiteren Armmoduls (18) zur Kodierung und/oder Positionierung des Armmoduls (25) zum weiteren Armmodul (18) einzugreifen und/oder
- wobei die zweite Anschlussplatte (300) eine Stiftaufnahme (405) aufweist,
- wobei die Stiftaufnahme (405) korrespondierend zu dem Stift (175) ausgebildet und dazu eingerichtet ist, einen Stift (175) eines weiteren Armmoduls (18) aufzunehmen.

11. Armmodul (18) nach einem der vorhergehenden Ansprüche,
- wobei das Armmodul (18) als ein aktives Armmodul (25) ausgebildet ist,
- aufweisend eine Antriebseinrichtung (430),
- wobei die erste Anschlussseite (40) rotierbar um die erste Montageachse (100) gelagert ist und drehmomentschlüssig mit der Antriebseinrichtung (430) verbunden ist,
- wobei die Antriebseinrichtung (430) ausgebildet ist, die erste Anschlussseite (40) steuerbar um die erste Montageachse (100) zu rotieren,
- oder
- wobei das Armmodul (18) als ein passives Armmodul (30) ausgebildet ist,
- wobei die erste Anschlussplatte (95) drehfest mit dem ersten Gehäuse (60) auf einer zur zweiten Anschlussseite (45) abgewandten Seite des ersten Gehäuses (60) verbunden ist.

12. Armmodul (25), welches als aktives Armmodul (25) nach Anspruch 11 ausgebildet ist,
- wobei die erste Anschlussseite (40) eine Hohlwelle (470) aufweist,
- wobei die Hohlwelle (470) drehmomentschlüssig mit einer Ausgangsseite der Antriebseinrichtung (430) verbunden ist,
- wobei die Hohlwelle (470) die Antriebseinrichtung (430) durchgreift und ein erstes axiales Ende der Hohlwelle (470) mit der ersten Anschlussplatte (95) drehfest verbunden ist und ein zweites axiale Ende der Hohlwelle (470) beabstandet zu der Antriebseinrichtung (430) angeordnet ist,
- wobei in der Hohlwelle (470) wenigstens ein mit der ersten Fluidkontakteinrichtung (180) fluidisch verbundener Fluidkanal (510) und wenigstens eine mit der ersten Kontakteinrichtung (220) verbundene elektrische Datenverbindung angeordnet ist.

13. Roboterarm (20) für einen Industrieroboter (10) mit wenigstens einem ersten Armmodul (18) und einem zweiten Armmodul (18),
- wobei das erste Armmodul (18) und das zweite Armmodul (18) jeweils nach einem der Ansprüche 1 bis 12 ausgebildet sind,
- wobei der Befestigungsring (340) des ersten Armmoduls (18) derart auf die erste Anschlussseite (40) des zweiten Armmoduls (18) aufgeschraubt ist, dass das Innengewinde (350) des ersten Armmoduls (18) und das Außengewinde (110) der ersten Anschlussseite (40) des zweiten Armmoduls (18) ineinander greifen,
- wobei die erste Stirnverzahnung (116) der ersten Anschlussseite (40) und die zweite Stirnverzahnung (365) der zweiten Anschlussseite (45) ineinander eingreifen,
- wobei die erste Anschlussseite (40) des zweiten Armmoduls (18) mit der zweiten Anschlussseite (45) des ersten Armmoduls (18) mechanisch zur Übertragung von Stützkräften und/oder Antriebskräften zwischen dem ersten Armmodul (18) und dem zweiten Armmodul (18) verbunden ist,
- wobei über die miteinander verbundenen ersten und zweiten Anschlussseiten (40, 45) des ersten Armmoduls (18) und zweiten Armmoduls (18) das Fluid (51) für einen am Roboterarm (20) anschließbaren Endeffektor und/oder das optisches Signal und/oder das elektrische Signal für eine Datenübertragung und zur Steuerung der beiden Armmodule (18) und/oder des Endeffektors austauschbar sind.

14. Roboterarm (20) nach Anspruch 13,
- wobei die erste Stirnverzahnung (116) und die zweite Stirnverzahnung (365) derart zueinander ausgebildet sind, dass die beiden Stirnverzahnungen (116, 365) bei einer Montage der ersten Anschlussseite (40) an der zweiten Anschlussseite (45) durch ein Entlanggleiten der beiden Stirnverzahnungen (116, 365) aneinander die zweite Anschlussplatte (300) zentriert zu der ersten Montageachse (100) ausgerichtet ist
und/oder
- wobei die zweite Anschlussseite (45) die Stiftaufnahme (405) aufweist,
- wobei die Stiftaufnahme (405) zur Orientierung und/oder Kodierung der zweiten Anschlussseite (45) relativ zur ersten Anschlussseite (40) ausgebildet und in der zweiten Anschlussplatte (300) angeordnet ist,
- wobei in montiertem Zustand der ersten Anschlussseite (40) und der zweiten Anschlussseite (45) aneinander der Stift (175) in die Stiftaufnahme (405) eingreift und vorzugsweise die erste Anschlussplatte (95) der ersten Anschlussseite (40) mit der zweiten Anschlussplatte (300) elektrisch zur Ausbildung eines Massekontakts zwischen den beiden Armmodulen (18) verbindet.

15. Industrieroboter (10),
- aufweisend einen Roboterarm (20) nach Anspruch 13 oder 14 und eine Roboterbasis (15),
- wobei die erste Anschlussseite (40) des ersten Armmoduls (18) der Roboterbasis (15) zugewandt ist,
- wobei über die erste Anschlussseite (40) des zweiten Armmoduls (18) und die zweite Anschlussseite (45) des ersten Armmoduls (18) hinweg das Fluid (51) und/oder das optische Signal und/oder das elektrische Signal zwischen der Roboterbasis (15) zugewandten ersten Anschlussseite (40) des ersten Armmoduls (18) und einer der Roboterbasis (15) abgewandten zweiten Anschlussseite (45) des zweiten Armmoduls (18) übertragbar ist.

## Claims

1. Arm module (18) for a modular robot arm (20) of an industrial robot (10),
- having a first housing (60), a first connection side (40) and a second connection side (45),
- wherein the first connection side (40) has a first connection plate (95) and a first contact device (220), and the second connection side (45) is mechanically co-rotationally connected to the first housing (60) and has a second connection plate (300),
- wherein the first contact device (220) is arranged on the first connection plate (95) and extends parallel to a first mounting axis (100),
- wherein the first connection side (40) can be connected to a further arm module (18) of the robot arm (20),
- wherein an optical signal and/or an electrical signal can be transmitted via the first contact device (220) for data transmission,
- wherein the second connection plate (300) is embraced on the circumference by a securing ring (340), and the securing ring (340) has an internal thread (350) on an inner circumferential side (345),
- wherein the securing ring (340) is connected to a first housing (60) of the arm module (18) so as to be rotatable about the second mounting axis (325),
- wherein first spur gearing (116) is arranged on the first connection plate (95),
- wherein the second connection plate (300) has second spur gearing (365),
- wherein the first spur gearing (116) and the second spur gearing (365) are designed to be complementary and/or correspond to each other,
- wherein an external thread (110) running around the first mounting axis (100) is arranged on a first outer circumferential side (105) of the first connection plate (95),
- wherein the internal thread (35) is designed to correspond to the external thread (110),
**characterized in that**
- the first connection side (40) has a first fluid contact device (180),
- wherein the first fluid contact device (180) is arranged on the first connection plate (95) and extends parallel to a first mounting axis (100),
- wherein a fluid (51), in particular compressed air or a hydraulic fluid, can be transferred via the first fluid contact device (180),
- wherein the securing ring (340) is axially firmly connected to a first housing (60) of the arm module (18) .

2. Arm module (18) according to Claim 1,
- wherein the first spur gearing (116) and/or the second spur gearing (365) is/are designed as a Hirth serration,
and/or
- wherein the second spur gearing (365) is arranged adjacent to the securing ring (340) on the inside.

3. Arm module (18) according to one of the preceding claims,
- wherein the first connection plate (95) and the first spur gearing (116) are formed in one piece and integrally
and/or
- wherein the second connection plate (300) and the second spur gearing (365) are formed in one piece and integrally.

4. Arm module (18) according to one of the preceding claims,
- wherein, in the radial direction (Raₙ, Rpₙ), the first spur gearing (116) adjoins the first outer circumferential side (105) on the inside,
- wherein the first fluid contact device (180) is arranged radially between the first power contact device (205) and the first spur gearing (116).

5. Arm module (18) according to one of the preceding claims,
- wherein the first spur gearing (116) has at least one first tooth (120),
- wherein the first tooth (120) has a first recess (125), which extends in the axial direction along the first mounting axis (100),
- wherein the second connection side (45) is co-rotationally connected to the first housing (60) by a third securing means (330),
- wherein the third securing means (330) projects beyond the second connection plate (300),
- wherein the first recess (125) is designed to correspond at least partly to the third securing means (330)
and/or
- wherein, in the radial direction (Raₙ, Rpₙ) with reference to the first mounting axis (100), the first power contact device (205) is arranged between the first contact device (220) and the first fluid contact device (180),
- wherein, radially on the outside relative to the first power contact device (205), the first fluid contact device (180) is arranged on the first connection plate (95) between the first power contact device (205) and the first outer circumferential side (105),
- wherein a fluid (51), in particular compressed air or a hydraulic fluid, can be transferred via the first fluid contact device (180), an optical signal and/or an electrical signal can be transmitted via the first contact device (220) for data transmission, and electrical power for supplying the arm module (18) with electrical energy can be transferred via the first power contact device (205) .

6. Arm module (18) according to one of the preceding claims,
- wherein the second connection side (45) has a second fluid contact device (305) designed to correspond to the first fluid contact device (180), a second power contact device (315) designed to correspond to the first power contact device (205), and a second contact device (310) designed to correspond to the first contact device (220),
- wherein the second fluid contact device (305), the second power contact device (315) and the second contact device (310) are arranged on the second connection plate (300), and the second fluid contact device (305), the second power contact device (315) and the second contact device (310) extend along a second mounting axis (325),
- wherein the first fluid contact device (180) is directly or indirectly fluidically connected to the second fluid contact device (305) in the first housing (60), and the first contact device (220) has a data-based connection to the second contact device (310) for the transmission of the optical and/or electrical signal directly or indirectly in the first housing (60),
- wherein the first power contact device (205) and the second power contact device (315) are directly or indirectly electrically connected to each other in the first housing (60),
- wherein the first power contact device (205) and the second power contact device (315) are electrically connected to each other,
- wherein the fluid (51) can be transferred via the second fluid contact device (305), the electrical power can be transferred via the second power contact device (315), and the optical and/or the electrical signal can be transmitted via the second contact device (310).

7. Arm module (18) according to one of the preceding claims,
- wherein the first contact device (220) has a plurality of first contact elements (225) arranged in the circumferential direction with reference to the first mounting axis (100),
- wherein the first contact elements (225) are arranged concentrically to the first mounting axis (100),
- wherein the electrical data signal can be transmitted via the first contact element (225).

8. Arm module (18) according to one of the preceding claims,
- wherein the first fluid contact device (180) has a plurality of first fluid contacts (185) arranged to be offset in the circumferential direction (Uraₙ, Urp) with reference to the first mounting axis (100),
- wherein the first fluid contacts (185) are arranged concentrically to the first mounting axis (100) and are formed identically to one another,
- wherein the first fluid contacts (185) are separated fluidically from one another and/or are at least partly connected fluidically in parallel.

9. Arm module (18) according to Claim 8,
- wherein the second fluid contact device (305) has at least one second fluid contact (395),
- wherein the second fluid contact (395) extends parallel to the second mounting axis (325),
- wherein the first fluid contact (185) and the second fluid contact (395) are connected to each other for the exchange of a fluid (530),
- wherein the first fluid contact (185) has a tubular receptacle (190) and the second fluid contact (395) has a tubular section (396),
- wherein the tubular receptacle (190) and the tubular section (396) are designed to correspond to each other, at least on the circumference.

10. Arm module (18) according to one of the preceding claims,
- having a pin (175) extending at a distance from and parallel to the first mounting axis (100),
- wherein the pin (175) is electrically and mechanically connected to the first connection plate (95) and projects beyond the first connection plate (95),
- wherein the pin (175) is designed to engage in a pin receptacle (405) of the further arm module (18) for the coding and/or positioning of the arm module (25) relative to the further arm module (18), and/or
- wherein the second connection plate (300) has a pin receptacle (405),
- wherein the pin receptacle (405) is designed to correspond to the pin (175) and is configured to receive a pin (175) of a further arm module (18).

11. Arm module (18) according to one of the preceding claims,
- wherein the arm module (18) is designed as an active arm module (25),
- having a drive device (430),
- wherein the first connection side (40) is mounted such that it can rotate about the first mounting axis (100) and is connected to the drive device (430) in a torque-locking manner,
- wherein the drive device (430) is designed to rotate the first connection side (40) controllably about the first mounting axis (100),
- or
- wherein the arm module (18) is designed as a passive arm module (30),
- wherein the first connection plate (95) is co-rotationally connected to the first housing (60) on a side of the first housing (60) that faces away from the second connection side (45).

12. Arm module (25), which is designed as an active arm module (25) according to Claim 11,
- wherein the first connection side (40) has a hollow shaft (470),
- wherein the hollow shaft (470) is connected to an output side of the drive device (430) in a torque-locking manner,
- wherein the hollow shaft (470) reaches through the drive device (430) and a first axial end of the hollow shaft (470) is co-rotationally connected to the first connection plate (95), and a second axial end of the hollow shaft (470) is arranged at a distance from the drive device (430),
- wherein at least one fluid channel (510) fluidically connected to the first fluid contact device (180), and at least one electrical data connection connected to the first contact device (220) are arranged in the hollow shaft (470).

13. Robot arm (20) for an industrial robot (10) having at least one first arm module (18) and a second arm module (18),
- wherein the first arm module (18) and the second arm module (18) are each designed according to one of Claims 1 to 12,
- wherein the securing ring (340) of the first arm module (18) is screwed onto the first connection side (40) of the second arm module (18) in such a way that the internal thread (350) of the first arm module (18) and the external thread (110) of the first connection side (40) of the second arm module (18) interengage,
- wherein the first spur gearing (116) of the first connection side (40) and the second spur gearing (365) of the second connection side (45) interengage,
- wherein the first connection side (40) of the second arm module (18) is connected mechanically to the second connection side (45) of the first arm module (18) for the transmission of supporting forces and/or drive forces between the first arm module (18) and the second arm module (18),
- wherein the fluid (51) for an end effector that can be attached to the robot arm (20) and/or the optical signal and/or the electrical signal for a data transmission and for controlling the two arm modules (18) and/or the end effector can be exchanged via the interconnected first and second connection sides (40, 45) of the first arm module (18) and second arm module (18).

14. Robot arm (20) according to Claim 13,
- wherein the first spur gearing (116) and the second spur gearing (365) are designed relative to each other in such a way that when the first connection side (40) is mounted on the second connection side (45), the second connection plate (300) is aligned and centred relative to the first mounting axis (100) by the two sets of spur gearing (116, 365) sliding along on each other
and/or
- wherein the second connection side (45) has the pin receptacle (405),
- wherein the pin receptacle (405) is designed for the orientation and/or coding of the second connection side (45) relative to the first connection side (40) and is arranged in the second connection plate (300),
- wherein, when the first connection side (40) and the second connection side (45) are mounted on each other, the pin (175) engages in the pin receptacle (405) and, preferably, connects the first connection plate (95) of the first connection side (40) electrically to the second connection plate (300) to form an earth contact between the two arm modules (18) .

15. Industrial robot (10),
- having a robot arm (20) according to Claim 13 or 14 and a robot base (15),
- wherein the first connection side (40) of the first arm module (18) faces the robot base (15),
- wherein, via the first connection side (40) of the second arm module (18) and the second connection side (45) of the first arm module (18), the fluid (51) and/or the optical signal and/or the electrical signal can be transferred between a first connection side (40) of the first arm module (18), facing the robot base (15), and a second connection side (45) of the second arm module (18), facing away from the robot base (15).

## Revendications

1. Module de bras (18) pour un bras de robot modulaire (20) d'un robot industriel (10),
- présentant un premier boîtier (60), un premier côté de raccordement (40) et un deuxième côté de raccordement (45),
- dans lequel le premier côté de raccordement (40) présente une première plaque de raccordement (95) et un premier dispositif de contact (220), et le deuxième côté de raccordement (45) est relié mécaniquement au premier boîtier (60) de manière solidaire en rotation et présente une deuxième plaque de raccordement (300),
- dans lequel le premier dispositif de contact (220) est disposé au niveau de la première plaque de raccordement (95) et s'étend en parallèle à un premier axe de montage (100),
- dans lequel le premier côté de raccordement (40) peut être relié à un autre module de bras (18) du bras de robot (20),
- dans lequel un signal optique et/ou un signal électrique peuvent être transmis par le premier dispositif de contact (220) pour la transmission de données,
- dans lequel la deuxième plaque de raccordement (300) est entourée côté circonférence par une bague de fixation (340), et la bague de fixation (340) présente un taraudage (350) sur un côté circonférentiel intérieur (345),
- dans lequel la bague de fixation (340) est reliée à un premier boîtier (60) du module de bras (18) en rotation autour du deuxième axe de montage (325),
- dans lequel une première denture frontale (116) est disposée sur la première plaque de raccordement (95),
- dans lequel la deuxième plaque de raccordement (300) présente une deuxième denture frontale (365),
- dans lequel la première denture frontale (116) et la deuxième denture frontale (365) sont réalisées de manière complémentaire et/ou de manière à se correspondre mutuellement,
- dans lequel un filetage (110) est disposé sur un premier côté circonférentiel extérieur (105) de la première plaque de raccordement (95) de manière périphérique autour du premier axe de montage (100),
- dans lequel le taraudage (35) est réalisé de manière à correspondre au filetage (110),
**caractérisé en ce que**
- le premier côté de raccordement (40) présente un premier dispositif de contact fluidique (180),
- dans lequel le premier dispositif de contact fluidique (180) est disposé au niveau de la première plaque de raccordement (95) et s'étend en parallèle à un premier axe de montage (100),
- dans lequel un fluide (51), en particulier de l'air comprimé ou un liquide hydraulique, peut être transmis par l'intermédiaire du premier dispositif de contact fluidique (180),
- dans lequel la bague de fixation (340) est reliée de manière axialement fixe à un premier boîtier (60) du module de bras (18).

2. Module de bras (18) selon la revendication 1,
- dans lequel la première denture frontale (116) et/ou la deuxième denture frontale (365) est/sont réalisée(s) sous forme de denture Hirth, et/ou
- dans lequel la deuxième denture frontale (365) est disposée côté intérieur à la suite de la bague de fixation (340).

3. Module de bras (18) selon l'une quelconque des revendications précédentes,
- dans lequel la première plaque de raccordement (95) et la première denture frontale (116) sont réalisées d'un seul tenant et en venant de matière, et/ou
- dans lequel la deuxième plaque de raccordement (300) et la deuxième denture frontale (365) sont réalisées d'un seul tenant et en venant de matière.

4. Module de bras (18) selon l'une quelconque des revendications précédentes,
- dans lequel la première denture frontale (116) est adjacente côté intérieur au premier côté circonférentiel extérieur (105) dans la direction radiale (Raₙ, Rpₙ),
- dans lequel le premier dispositif de contact fluidique (180) est disposé radialement entre le premier dispositif de contact de puissance (205) et la première denture frontale (116).

5. Module de bras (18) selon l'une quelconque des revendications précédentes,
- dans lequel la première denture frontale (116) présente au moins une première dent (120),
- dans lequel la première dent (120) présente une première encoche (125) qui s'étend dans la direction axiale le long du premier axe de montage (100),
- dans lequel le deuxième côté de raccordement (45) est relié au premier boîtier (60) de manière solidaire en rotation au moyen d'un troisième moyen de fixation (330),
- dans lequel le troisième moyen de fixation (330) dépasse de la deuxième plaque de raccordement (300),
- dans lequel la première encoche (125) est réalisée au moins par endroits de façon à correspondre au troisième moyen de fixation (330), et/ou
- dans lequel le premier dispositif de contact de puissance (205) est disposé entre le premier dispositif de contact (220) et le premier dispositif de contact fluidique (180) dans la direction radiale (Raₙ, Rpₙ) par rapport au premier axe de montage (100),
- dans lequel, radialement côté extérieur par rapport au premier dispositif de contact de puissance (205), le premier dispositif de contact fluidique (180) est disposé entre le premier dispositif de contact de puissance (205) et le premier côté circonférentiel extérieur (105) au niveau de la première plaque de raccordement (95),
- dans lequel un fluide (51), en particulier de l'air comprimé ou un liquide hydraulique, peut être transmis par l'intermédiaire du premier dispositif de contact fluidique (180), un signal optique et/ou un signal électrique pour la transmission de données peut/peuvent être transmis par l'intermédiaire du premier dispositif de contact (220), et une puissance électrique pour alimenter le module de bras (18) en énergie électrique peut être transmise par l'intermédiaire du premier dispositif de contact de puissance (205).

6. Module de bras (18) selon l'une quelconque des revendications précédentes,
- dans lequel le deuxième côté de raccordement (45) présente un deuxième dispositif de contact fluidique (305) réalisé de façon à correspondre au premier dispositif de contact fluidique (180), un deuxième dispositif de contact de puissance (315) réalisé de façon à correspondre au premier dispositif de contact de puissance (205), et un deuxième dispositif de contact (310) réalisé de façon à correspondre au premier dispositif de contact (220),
- dans lequel le deuxième dispositif de contact fluidique (305), le deuxième dispositif de contact de puissance (315) et le deuxième dispositif de contact (310) sont disposés au niveau de la deuxième plaque de raccordement (300), et le deuxième dispositif de contact fluidique (305), le deuxième dispositif de contact de puissance (315) et le deuxième dispositif de contact (310) s'étendent le long d'un deuxième axe de montage (325),
- dans lequel le premier dispositif de contact fluidique (180) est relié au deuxième dispositif de contact fluidique (305) de manière directement ou indirectement fluidique dans le premier boîtier (60), et le premier dispositif de contact (220) est relié au deuxième dispositif de contact (310) de manière directement ou indirectement informatique pour la transmission du signal optique et/ou électrique dans le premier boîtier (60),
- dans lequel le premier dispositif de contact de puissance (205) et le deuxième dispositif de contact de puissance (315) sont reliés ensemble de manière directement ou indirectement électrique dans le premier boîtier (60),
- dans lequel le premier dispositif de contact de puissance (205) et le deuxième dispositif de contact de puissance (315) sont reliés ensemble de manière électrique,
- dans lequel le fluide (51) peut être transmis par l'intermédiaire du deuxième dispositif de contact fluidique (305), la puissance électrique peut être transmise par l'intermédiaire du deuxième dispositif de contact de puissance (315), et le signal optique et/ou électrique peut/peuvent être transmis par l'intermédiaire du deuxième dispositif de contact (310) .

7. Module de bras (18) selon l'une quelconque des revendications précédentes,
- dans lequel le premier dispositif de contact (220) présente plusieurs premiers éléments de contact (225) disposés dans la direction circonférentielle par rapport au premier axe de montage (100),
- dans lequel les premiers éléments de contact (225) sont disposés de manière concentrique par rapport au premier axe de montage (100),
- dans lequel le signal de données électrique peut être transmis par l'intermédiaire du premier élément de contact (225).

8. Module de bras (18) selon l'une quelconque des revendications précédentes,
- dans lequel le premier dispositif de contact fluidique (180) présente plusieurs premiers contacts fluidiques (185) disposés de manière décalée dans la direction circonférentielle (Uraₙ, Urₚ) par rapport au premier axe de montage (100),
- dans lequel les premiers contacts fluidiques (185) sont disposés de manière concentrique par rapport au premier axe de montage (100) et sont réalisés de manière identique entre eux,
- dans lequel les premiers contacts fluidiques (185) sont séparés fluidiquement les uns des autres et/ou sont au moins partiellement connectés fluidiquement en parallèle.

9. Module de bras (18) selon la revendication 8,
- dans lequel le deuxième dispositif de contact fluidique (305) présente au moins un deuxième contact fluidique (395),
- dans lequel le deuxième contact fluidique (395) s'étend en parallèle au deuxième axe de montage (325),
- dans lequel le premier contact fluidique (185) est relié au deuxième contact fluidique (395) pour échanger un fluide (530) entre eux,
- dans lequel le premier contact fluidique (185) présente un logement de tuyau (190) et le deuxième contact fluidique (395) présente une section de tuyau (396),
- dans lequel le logement de tuyau (190) et la section de tuyau (396) sont réalisés de façon à se correspondre au moins côté circonférence.

10. Module de bras (18) selon l'une quelconque des revendications précédentes,
- présentant une broche (175) s'étendant à distance et en parallèle au premier axe de montage (100),
- dans lequel la broche (175) est reliée électriquement et mécaniquement à la première plaque de raccordement (95) et dépasse de la première plaque de raccordement (95),
- dans lequel la broche (175) est réalisée pour venir en prise dans un logement de broche (405) de l'autre module de bras (18) pour le codage et/ou le positionnement du module de bras (25) par rapport à l'autre module de bras (18), et/ou
- dans lequel la deuxième plaque de raccordement (300) présente un logement de broche (405),
- dans lequel le logement de broche (405) est réalisé de façon à correspondre à la broche (175) et est conçu pour recevoir une broche (175) d'un autre module de bras (18).

11. Module de bras (18) selon l'une quelconque des revendications précédentes,
- dans lequel le module de bras (18) est réalisé comme un module de bras actif (25),
- présentant un dispositif d'entraînement (430),
- dans lequel le premier côté de raccordement (40) est monté en rotation autour du premier axe de montage (100) et est relié au dispositif d'entraînement (430) par liaison de transmission de couple,
- dans lequel le dispositif d'entraînement (430) est réalisé pour faire tourner le premier côté de raccordement (40) de manière contrôlable autour du premier axe de montage (100),
- ou
- dans lequel le module de bras (18) est réalisé comme un module de bras passif (30),
- dans lequel la première plaque de raccordement (95) est reliée au premier boîtier (60) de manière solidaire en rotation sur un côté du premier boîtier (60) détourné vers le deuxième côté de raccordement (45) .

12. Module de bras (25) qui est réalisé comme un module de bras (25) actif selon la revendication 11,
- dans lequel le premier côté de raccordement (40) présente un arbre creux (470),
- dans lequel l'arbre creux (470) est relié à un côté sortie du dispositif d'entraînement (430) par liaison de transmission de couple,
- dans lequel l'arbre creux (470) traverse le dispositif d'entraînement (430), et une première extrémité axiale de l'arbre creux (470) est reliée à la première plaque de raccordement (95) de manière solidaire en rotation, et une deuxième extrémité axiale de l'arbre creux (470) est disposée à distance du dispositif d'entraînement (430),
- dans lequel au moins un canal de fluide (510) relié fluidiquement au premier dispositif de contact fluidique (180) et au moins une liaison de données électrique reliée au premier dispositif de contact (220) sont disposés dans l'arbre creux (470).

13. Bras de robot (20) pour un robot industriel (10) comprenant au moins un premier module de bras (18) et un deuxième module de bras (18),
- dans lequel le premier module de bras (18) et le deuxième module de bras (18) sont réalisés respectivement selon l'une quelconque des revendications 1 à 12,
- dans lequel la bague de fixation (340) du premier module de bras (18) est vissée sur le premier côté de raccordement (40) du deuxième module de bras (18) de telle sorte que le taraudage (350) du premier module de bras (18) et le filetage (110) du premier côté de raccordement (40) du deuxième module de bras (18) viennent en prise l'un dans l'autre,
- dans lequel la première denture frontale (116) du premier côté de raccordement (40) et la deuxième denture frontale (365) du deuxième côté de raccordement (45) viennent en prise l'une dans l'autre,
- dans lequel le premier côté de raccordement (40) du deuxième module de bras (18) est relié mécaniquement au deuxième côté de raccordement (45) du premier module de bras (18) pour transmettre des forces d'appui et/ou des forces d'entraînement entre le premier module de bras (18) et le deuxième module de bras (18),
- dans lequel le fluide (51) pour un effecteur terminal pouvant être raccordé au bras de robot (20) et/ou le signal optique et/ou le signal électrique pour une transmission de données et pour la commande des deux modules de bras (18) et/ou de l'effecteur terminal peuvent être échangés par l'intermédiaire des premiers et deuxièmes côtés de raccordement (40, 45), reliés ensemble, du premier module de bras (18) et du deuxième module de bras (18).

14. Bras de robot (20) selon la revendication 13,
- dans lequel la première denture frontale (116) et la deuxième denture frontale (365) sont réalisées l'une par rapport à l'autre de telle sorte que lors d'un montage du premier côté de raccordement (40) sur le deuxième côté de raccordement (45), la deuxième plaque de raccordement (300) est alignée de manière centrée par rapport au premier axe de montage (100) suite à un coulissement des deux dentures frontales (116, 365) l'une contre l'autre, et/ou
- dans lequel le deuxième côté de raccordement (45) présente le logement de broche (405),
- dans lequel le logement de broche (405) est réalisé pour l'orientation et/ou le codage du deuxième côté de raccordement (45) par rapport au premier côté de raccordement (40) et est disposé dans la deuxième plaque de raccordement (300),
- dans lequel, à l'état monté du premier côté de raccordement (40) et du deuxième côté de raccordement (45) l'un contre l'autre, la broche (175) vient en prise dans le logement de broche (405) et relie électriquement de préférence la première plaque de raccordement (95) du premier côté de raccordement (40) à la deuxième plaque de raccordement (300) pour réaliser un contact de masse entre les deux modules de bras (18).

15. Robot industriel (10),
- présentant un bras de robot (20) selon la revendication 13 ou 14 et une base de robot (15),
- dans lequel le premier côté de raccordement (40) du premier module de bras (18) est tourné vers la base de robot (15),
- dans lequel le fluide (51) et/ou le signal optique et/ou le signal électrique peuvent être transmis par l'intermédiaire du premier côté de raccordement (40) du deuxième module de bras (18) et du deuxième côté de raccordement (45) du premier module de bras (18) entre le premier côté de raccordement (40), tourné vers la base de robot (15), du premier module de bras (18) et un deuxième côté de raccordement (45), détourné de la base de robot (15), du deuxième module de bras (18).
